# EUROPÄISCHE PATENTSCHRIFT

(11) **EP 3 700 066 B1**
(45) Veröffentlichungstag und Bekanntmachung des Hinweises auf die Patenterteilung: **28.01.2026**
(21) Anmeldenummer: 20170126.5
(22) Anmeldetag: 13.04.2017
(51) Int. Cl.: H02K 5/22, B65G 23/08, B65G 43/10

(54) **FÖRDERANLAGE ZUM FÖRDERN VON STÜCKGÜTERN MIT VERBESSERTEM ELEKTRISCHEM ANSCHLUSSSYSTEM**
CONVEYOR SYSTEM FOR CONVEYING PIECE GOODS WITH IMPROVED ELECTRICAL CONNECTION SYSTEM
INSTALLATION DE TRANSPORT PERMETTANT DE TRANSPORTER DES MARCHANDISES DE DÉTAIL POURVUE DE SYSTÈME DE RACCORDEMENT ÉLECTRIQUE AMÉLIORÉ

(30) Priorität: 13.04.2016 AT 503192016
(43) Veröffentlichungstag der Anmeldung: 26.08.2020
(62) Teilanmeldung aus: 17723235.2
(73) Patentinhaber: TGW Logistics GmbH, 4614 Marchtrenk (AT)
(72) Erfinder: HOFER, Stefan, 4710 Pollham (AT); KRIECHBAUM, Thomas, 4701 Bad Schallerbach (AT); RAUSCH, Martin, 4810 Gmunden (AT)
(74) Vertreter: Burger, Hannes

(56) Entgegenhaltungen:
- EP-A1- 1 590 275
- EP-A2- 0 670 197
- WO-A1-2013/147011
- WO-A1-2015/051390
- WO-A1-2015/051392
- US-A- 5 460 257

## Beschreibung

Die Erfindung betrifft eine Förderanlage zum Fördern von Stückgütern, umfassend ein erstes und ein zweites Rahmenprofil, einen elektrischen Energieversorgungsbus, welcher entlang des ersten und/oder zweiten Rahmenprofils angeordnet ist und welcher einen ersten Spannungsbus und einen davon getrennten zweiten Spannungsbus aufweist, und einen als elektrischen Rotationsmotor ausgebildeten ersten Aktor zum Antrieb zumindest eines Förderelementes, welches als motorisierte Förderrolle ausgebildet ist und am ersten Rahmenprofil und/oder zweiten Rahmenprofil gelagert ist. Darüber hinaus umfasst die Förderanlage eine erste elektrische Anschlussbox, mittels welcher der erste Aktor an den Energieversorgungsbus angeschlossen ist, welche mit einer ersten Steuerelektronik ausgestattet ist, welche an dem ersten/zweiten Rahmenprofil montiert ist, an dem auch der elektrische Energieversorgungsbus angeordnet ist, und welche erste Kontakte umfasst, welche an den ersten Spannungsbus angeschlossen sind. Ferner umfasst die Förderanlage eine zweite elektrische Anschlussbox, welche im Bereich des ersten/zweiten Rahmenprofils montiert ist, an dem auch der elektrische Energieversorgungsbus angeordnet ist, und welche erste Kontakte umfasst, welche an den ersten Spannungsbus angeschlossen sind.

Eine Förderanlage der oben genannten Art ist aus dem Stand der Technik bekannt. Beispielsweise können motorisierte Förderrollen mit Hilfe des oben offenbarten Anschlusssystems elektrisch versorgt werden. Im Rahmen der Entwicklung einer Förderanlage können der Energieversorgungsbus, die ersten Anschlussboxen sowie die ersten Aktoren (z.B. Motoren einer Förderrolle) gut aufeinander abgestimmt werden, sodass sich insgesamt ein gut funktionierendes und effizient herstellbares Gesamtsystem ergibt.

Problematisch ist jedoch, dass Förderanlagen häufig an Kundenanforderungen angepasst werden müssen, beispielsweise weil eine neue Förderanlage in ein bestehendes System eingebunden werden muss oder weil seitens des Kunden bestimmte Komponenten vorgegeben werden. Beispielsweise können diese Komponenten ein Hubwerk, eine Sperrklappe, ein Anschlag, ein Abweiser und/oder eine Beschleunigungsrolle sein, welche mit einem zweiten Aktor betrieben werden, welcher sich vom ersten Aktor unterscheidet.

Grundsätzlich wird dieses Problem bis dato so gelöst, dass diese Komponenten mit Hilfe eines gesonderten Kabels an das elektrische System angeschlossen werden, welches entlang der Förderanlage bis zu einem Steuerschrank geführt wird. Dies ist zwar bei einzelnen Komponenten noch akzeptabel, führt aber bei einer höheren Anzahl rasch zu einem unübersichtlichen, fehleranfälligen und auch optisch unansehnlichen Gesamtsystem.

Teilweise wird dem Problem auch dadurch begegnet, dass die für den ersten Aktor bestimmten ersten Anschlussboxen erweiterte Funktionalität bereitstellen, wodurch auch der Anschluss von zweiten Aktoren (oder auch Sensoren) ermöglicht wird. Naturgemäß führt das Vorsehen aller möglichen Eventualitäten rasch zu einer technisch unübersichtlichen Anschlussbox, die erst recht fehleranfällig ist. Grundsätzlich können ohnehin nicht alle zukünftigen Anforderungen vorausgeahnt werden, wodurch dieser Ansatz ohnehin nur eingeschränkt tauglich ist.

Die WO 2013/147011 A1 offenbart den Oberbegriff des Anspruchs 1.

Insbesondere offenbart die WO 2013/147011 A1 eine Fördervorrichtung und einen Zonenregler, in dem regenerativer Strom genutzt und ein stabiler Betrieb gewährleistet werden kann. Die Zonensteuerung ist in einen Betätigungsteil und einen Netzteil unterteilt. Das Netzteil hat eine Rückflusssperre, etwa mit einer Diode und einem Kondensator. Regenerativer Strom fließt daher nicht in das Netz zurück, sondern erhöht das Potential an einer Hilfsstromklemme des Netzteils. Wenn ein Motor einer angrenzenden Zone angetrieben wird, wird im angrenzenden Zonenförderer ein im Zonenförderer erzeugter regenerativer Strom verbraucht.

Eine Aufgabe der Erfindung ist es daher, eine verbesserte Förderanlage anzugeben. Insbesondere sollen die oben angegebenen Probleme überwunden und ein flexibel einsetzbares Anschlusssystem bereitgestellt werden, mit dessen Hilfe auf Kundenanforderungen eingegangen werden kann, ohne die Übersichtlichkeit und die Fehleranfälligkeit der Förderanlage zu verschlechtern.

Die Aufgabe der Erfindung wird durch die Merkmale des Anspruchs 1 gelöst.

Durch die vorgeschlagenen Maßnahmen können insbesondere firmenfremde Aktoren leicht in eine Förderanlage eingebunden werden, wobei die Nennleistung des zweiten Aktors die Nennleistung des Energieversorgungsbusses nicht übersteigen sollte.

Eine gesonderte Verkabelung, so wie dies nach dem Stand der Technik nötig ist, kann daher entfallen. Auch entfällt die Notwendigkeit, alle ersten Anschlussboxen im Hinblick auf alle möglicherweise auftretenden Eventualitäten auszustatten. Durch das Vorsehen einer speziellen Type einer Anschlussbox können die Kosten des Gesamtsystems reduziert werden. Dies ist ein durchaus überraschender Effekt, da ja üblicherweise danach gestrebt wird, die Typenvielfalt der in einer Förderanlage eingesetzten Komponenten zu reduzieren. Als Förderelement kann eine (motorisierte) Förderrolle vorgesehen sein. Als Funktionselement, welches durch den zweiten Aktor angetrieben wird, kann ein Hubwerk, eine Sperrklappe, ein Anschlag, ein Abweiser, eine Beschleunigungsrolle oder ähnliches vorgesehen sein. Der zweite Aktor kann insbesondere auch nur temporär mit der zweiten Anschlussbox verbunden sein.

Günstig ist es, wenn die zweite elektrische Anschlussbox in derselben Weise wie die erste Anschlussbox am ersten/zweiten Rahmenprofil montiert und mit dem elektrischen Energieversorgungsbus verbunden ist. Dadurch erfolgt die Montage der Förderanlage besonders intuitiv, da im Hinblick auf die Befestigung der Anschlussboxen auf dem Rahmenprofil nicht zwischen der ersten Anschlussbox und der zweiten Anschlussbox unterschieden werden muss.

Günstig ist es aber auch, wenn die zweite elektrische Anschlussbox sowohl elektrisch als auch mechanisch mit dem elektrischen Energieversorgungsbus verbunden ist. Insbesondere ist die zweite Anschlussbox mechanisch nur mit dem elektrischen Energieversorgungsbus verbunden. Das heißt, dass die zweite Anschlussbox nicht direkt mit dem ersten/zweiten Rahmenprofil verbunden ist, sondern nur indirekt über den am ersten/zweiten Rahmenprofil montierten Energieversorgungsbus. Im Speziellen kann die zweite Anschlussbox zumindest eine Rastnase aufweisen, mit der die Anschlussbox auf dem Energieversorgungsbus montiert (das heißt auf diesen aufgeclipst) wird. Die zumindest eine Rastnase kann dabei mit den elektrischen Leitern des Energieversorgungsbusses zusammenwirken und/oder auch mit einem Isolator desselben. Letzterer kann beispielsweise durch ein Kunststoffprofil gebildet sein, in dem die elektrischen Leiter des Energieversorgungsbusses eingebettet sind. Insbesondere können die elektrischen Leiter in das besagte Kunststoffprofil eingeclipst sein.

Vorteilhaft ist es weiterhin, wenn das erste/zweite Rahmenprofil mehrere in Längsrichtung des ersten/zweiten Rahmenprofils voneinander beabstandete Ausnehmungen aufweist und die zweite Anschlussbox zwei in Längsrichtung des ersten/zweiten Rahmenprofils voneinander beabstandete erste Vorsprünge aufweist, wobei der Abstand zwischen den ersten Vorsprüngen kleiner ist als die in Längsrichtung des ersten/zweiten Rahmenprofils gemessene Breite einer Ausnehmung, jedoch größer als der Abstand zwischen zwei Ausnehmungen. Auf diese Weise kann die zweite Anschlussbox in der Längsrichtung des ersten/zweiten Rahmenprofils örtlich festgelegt werden. Die beiden Vorsprünge der zweiten Anschlussbox ragen dabei entweder in dieselbe Ausnehmung des Rahmenprofils oder in benachbarte Ausnehmungen. In letzterem Fall liegt ein zwischen den beiden Ausnehmungen liegender Steg des Rahmenprofils zwischen den beiden Vorsprüngen. Im Speziellen kann der Außenabstand der beiden ersten Vorsprünge im Wesentlichen der Breite einer Ausnehmung und der Innenabstand der beiden ersten Vorsprünge im Wesentlichen dem Abstand zwischen zwei Ausnehmungen entsprechen. Dadurch wird eine Verschiebung der zweiten Anschlussbox in Längsrichtung des ersten/zweiten Rahmenprofils praktisch völlig ausgeschlossen. Die Angabe "im Wesentlichen" bedeutet im gegebenen Zusammenhang insbesondere eine Abweichung von 10%. Das örtliche Festlegen der Anschlussbox ist zwar vorteilhaft, jedoch nicht zwingend. Denkbar ist vielmehr auch, dass die zweite Anschlussbox keine solchen Vorsprünge aufweist und in Längsrichtung des ersten/zweiten Rahmenprofils frei verschiebbar ist.

In einer weiteren vorteilhaften Ausführungsvariante weist die zweite elektrische Anschlussbox zweite Vorsprünge auf, welche zwischen elektrischen Leitern des Energieversorgungsbusses liegen. Dadurch werden die elektrischen Leiter im Bereich der zweiten Anschlussbox besonders gut positioniert und werden insbesondere gut in einem Kunststoffprofil gehalten, in das die elektrischen Leiter eingeclipst sind.

An dieser Stelle wird auch festgehalten, dass sich der erste Aktor nicht nur hinsichtlich seiner Nennspannung vom zweiten Aktor unterscheidet, sondern auch die zugeordneten Nennströme unterschiedlich sein können.

Besonders vorteilhaft ist es, wenn Kontakte der ersten Anschlussbox, welche die elektrische Verbindung zum Energieversorgungsbus herstellen, zur Übertragung eines Nennstroms / einer Nennleistung des ersten Aktors ausgebildet sind und Kontakte der zweiten Anschlussbox, welche die elektrische Verbindung zum Energieversorgungsbus herstellen, zur Übertragung eines Nennstroms / einer Nennleistung des Energieversorgungsbusses ausgebildet sind. Dadurch kann zum zweiten Aktor eine deutlich größere elektrische Leistung übertragen werden als zum ersten Aktor. Beispielsweise können fünfzig oder mehr Förderrollen, also erste Aktoren, von einem Energieversorgungsbus versorgt werden. Demzufolge kann über die zweite Anschlussbox beispielsweise das Fünfzigfache der elektrischen Leistung der ersten Anschlussbox übertragen werden. Entsprechend werden in der zweiten Anschlussbox größere/mehr Kontakte vorgesehen als in der ersten Anschlussbox.

Vorteilhaft ist es aber auch, wenn Kontakte der ersten Anschlussbox, welche die elektrische Verbindung zum Energieversorgungsbus herstellen, und Kontakte der zweiten Anschlussbox, welche die elektrische Verbindung zum Energieversorgungsbus herstellen, zur Übertragung eines Nennstroms / einer Nennleistung des Energieversorgungsbusses ausgebildet sind. Auf diese Weise können dieselben Kontakte für die erste Anschlussbox und die zweite Anschlussbox verwendet werden, wodurch sich durch die Standardisierung unter Umständen Kostenvorteile im Gesamtsystem ergeben, obwohl die Kontakte der ersten Anschlussbox aus technischer Sicht eigentlich überdimensioniert sind.

In einer weiteren günstigen Ausführungsform der Förderanlage weist der Energieversorgungsbus einen ersten Spannungsbus und einen davon getrennten zweiten Spannungsbus auf, wobei die Nennleistung des ersten Spannungsbusses die Nennleistung des zweiten Spannungsbusses insbesondere um mindestens das Zehnfache übersteigt. Dadurch können die in einer Förderanlage verbauten Komponenten hinsichtlich ihrer Energieversorgung voneinander entkoppelt werden. Beispielsweise kann eine erste Gruppe von elektrischen Verbrauchern am ersten Spannungsbus angeschlossen sein, wohingegen eine zweite Gruppe von elektrischen Verbrauchern am zweiten Spannungsbus angeschlossen sein kann. Insbesondere kann die erste Gruppe relativ leistungsstarke Aktoren und die zweite Gruppe eher Komponenten mit geringem Leistungsbedarf, zum Beispiel eine Steuerung für die ersten Aktoren, beinhalten. Dadurch werden die genannten Steuerungen vom ersten Spannungsbus entkoppelt. Störungen auf dem ersten Spannungsbus, beispielsweise verursacht durch die Antriebselektronik (z.B. eine drehfelderzeugende und leistungsvariable Schaltung zum Antrieb eines bürstenlosen Motors), wirken sich daher nicht auf die besagten Steuerungen (z.B. den Steuerteil der besagten Antriebselektronik) aus. Insbesondere werden die Steuerungen selbst bei einem Totalausfall des ersten Spannungsbusses nicht beeinträchtigt und können weiterhin Signale für die Positionsbestimmung von beförderten Objekten liefern und speichern. Ein Wiederhochfahren der Förderanlage wird dadurch erleichtert. Im Hinblick auf die oben angeführte Gruppenzugehörigkeit der in einer Förderanlage verbauten Komponenten kann der erste Spannungsbus auch als "Leistungsspannungsbus" und der zweite Spannungsbus auch als "Steuerspannungsbus" angesehen beziehungsweise bezeichnet werden.

Günstig ist es zudem, wenn die Nennspannung des ersten Spannungsbusses von der Nennspannung des zweiten Spannungsbusses unterschiedlich ist und diese insbesondere um mindestens das Zweifache übersteigt. Dadurch können die über den ersten Spannungsbus übertragenen Ströme trotz vergleichsweise hoher elektrischer Leistung gering gehalten werden, wodurch auch die Kabelquerschnitte klein bleiben. Insbesondere unterscheiden sich die Leiterquerschnitte des ersten Spannungsbusses und des zweiten Spannungsbusses um maximal das Zweifache, oder diese sind überhaupt gleich, was die Kontaktierung in der Anschlussbox erleichtert. Beispielsweise kann für den ersten Spannungsbus eine Spannung von 48 V und für den zweiten Spannungsbus eine Spannung von 24 V vorgesehen sein. Denkbar sind natürlich auch andere Werte, nämlich beispielsweise 30 V für den ersten Spannungsbus und 12 V für den zweiten Spannungsbus.

Günstig ist es weiterhin, wenn die erste elektrische Anschlussbox und die zweite elektrische Anschlussbox erste Kontakte umfasst, welche an den ersten Spannungsbus angeschlossen sind, und/oder zweite Kontakte umfasst, welche an den zweiten Spannungsbus angeschlossen sind. Auf diese Weise kann auch eine Steuerung des zweiten Aktors über den zweiten Spannungsbus (Steuerspannungsbus) versorgt werden. Denkbar ist darüber hinaus, dass auch ein Datenbus, über welche Daten übertragen werden, mit Hilfe der zweiten Anschlussbox an den zweiten Aktor respektive eine Steuerung desselben weitergeleitet werden. Daten können aber grundsätzlich auch auf den zweiten Spannungsbus aufmoduliert sein (Powerline-Communication). Wie zuvor angesprochen kann die Spannung am ersten Spannungsbus insbesondere 48 V und am zweiten Spannungsbus insbesondere 24 V betragen. Demzufolge können an der ersten Anschlussbox im Speziellen Aktoren mit einer Betriebsspannung von 48 V sowie Sensoren mit einer Betriebsspannung von 24 V und an der zweiten Anschlussbox Aktoren mit einer Betriebsspannung von 24 V oder 48 V angeschlossen werden.

Insbesondere können die weiter oben angesprochenen Kontakte den ersten Kontakten entsprechen, welche die elektrische Verbindung zum ersten Spannungsbus des Energieversorgungsbusses herstellen. Das heißt, die weiter oben angesprochene Kontaktgröße bezieht sich auf den ersten Spannungsbus und nicht auf den zweiten Spannungsbus.

In einer weiteren günstigen Variante der Förderanlage ist der zweite Aktor über die zweite Anschlussbox leistungsmäßig im Wesentlichen am ersten Spannungsbus angeschlossen. Das bedeutet insbesondere, dass mehr als 95% der an den zweiten Aktor übertragenen, elektrischen Leistung aus dem ersten Spannungsbus stammen. Im Speziellen kann der zweite Aktor über die zweite Anschlussbox auch ausschließlich am ersten Spannungsbus angeschlossen sein. Durch diese Maßnahmen wird der zweite Spannungsbus von leistungsstarken Verbrauchern und von diesen verursachten Störungen frei gehalten. Insbesondere können alle zweiten Aktoren über die zweiten Anschlussboxen leistungsmäßig im Wesentlichen oder ausschließlich am ersten Spannungsbus angeschlossen sein.

Vorteilhaft ist es in obigem Zusammenhang auch, wenn die von der zweiten Anschlussbox an den zweiten Aktor weitergeleitete Versorgungsspannung der Spannung am zweiten Spannungsbus entspricht. Auf diese Weise wird der zweite Spannungsbus von leistungsstarken Verbrauchern und von diesen verursachten Störungen frei gehalten, selbst dann, wenn sich der zweite Spannungsbus hinsichtlich seiner Nennspannung für den Anschluss des zweiten Aktors anbieten würde.

Vorteilhaft ist es, wenn die von der zweiten Anschlussbox an den zweiten Aktor weitergeleitete Versorgungsspannung einstellbar ist, insbesondere mit Hilfe eines Spannungswandlers. Besonders vorteilhaft ist es in diesem Zusammenhang auch, wenn der Spannungswandler zum Umwandeln einer Eingangsgleichspannung in eine Ausgangswechselspannung oder zum Umwandeln einer Eingangswechselspannung in eine Ausgangsgleichspannung ausgebildet ist. In einer weiteren besonderen Ausführungsform ist in der zweiten Anschlussbox ein Spannungswandler angeordnet, insbesondere als einzige elektronische Schaltung.

Durch die oben vorgeschlagenen Maßnahmen können auch Aktoren in der Förderanlage verbaut werden, welche hinsichtlich ihrer Nennspannung eigentlich ungeeignet sind. Dadurch können auf vergleichsweise einfache Weise Spezialanfertigungen, beispielsweise auf Kundenwunsch, realisiert werden. Beispielsweise kann die weitergeleitete Spannung fix vorgegeben sein, auf einen mehrerer fix vorgegebener Werte einstellbar sein oder überhaupt variabel einstellbar sein. Die Ausgangsspannung kann zum Beispiel 5 V, 12 V, 24 V, 48 V oder auch 230 V betragen. Die Ausgangsspannung kann eine Gleichspannung oder eine Wechselspannung sein.

Im Speziellen kann die Anschlussbox auch eine Steckdose für 110 V, 230 V oder 400 V aufweisen oder für den Anschluss einer solchen ausgebildet sein (das heißt eine Wechselspannung von 110 V und/oder 230 V und/oder 400 V ausgeben). Auf diese Weise können bei Revisionen der Förderanlage beispielsweise Standard-Geräte (Reinigungsgeräte, Staubsauger, Kompressor, Bohrmaschine, Schleifmaschine und dergleichen) kurzzeitig an der Förderanlage angeschlossen werden, ohne dass überlange Verlängerungskabel benötigt werden. Da die Förderanlage bei der Revision ohnehin still steht, können die angeschlossenen Verbraucher die gesamte Nennleistung des Energieversorgungsbusses beziehen. Beispielsweise kann eine Eingangsgleichspannung von 48 VDC in eine Ausgangswechselspannung von 230 VAC gewandelt werden. Aber auch die Umwandlung einer Eingangswechselspannung in eine Ausgangsgleichspannung ist denkbar, beispielsweise von 24 VAC auf 5 VDC. Die elektronischen Schaltungen zu der Umsetzung der oben genannten Funktionen sind an sich bekannt und beispielsweise als Aufwärtswandler, Abwärtswandler, Umrichter oder Kombination derselben ausgebildet. An dieser Stelle wird auch angemerkt, dass auch die an den zweiten Aktor weitergeleitete Steuerspannung in der zweiten Anschlussbox hinsichtlich ihrer Höhe und ihrer Form (Gleichspannung/Wechselspannung) verändert werden kann.

Denkbar ist weiterhin, dass zweite Anschlussboxen, welche eine gefährliche Ausgangsspannung bereitstellen (insbesondere größer als 48 V), nur im Wartungsfall aktiv geschaltet werden. Im Regelbetrieb bleiben sie jedoch inaktiv. Beispielsweise kann dies durch ein Relais erfolgen, dass durch einen entsprechenden Befehl einer zentralen Steuerung anzieht oder abfällt.

Denkbar ist weiterhin, dass zweite Anschlussboxen, welche eine gefährliche Ausgangsspannung bereitstellen (insbesondere größer als 48 V), überhaupt nur temporär an der Förderanlage montiert werden, beispielsweise für die Dauer einer Wartung. Beispielsweise kann das Wartungspersonal eine solche zweite Anschlussbox mitführen und am Ort der Wartung temporär montieren. Dadurch kann einerseits auf Verlängerungskabel verzichtet werden, es muss dazu aber auch keine Vielzahl an zweiten Anschlussboxen mit Steckdosen in der Förderanlage verbaut sein. Der Komfortgewinn für Wartungspersonal kann also mit geringem technischem Aufwand erzielt werden.

In einem weiteren Aspekt der Erfindung werden für den Wartungsfall benötigte elektrische Geräte (Reinigungsgeräte, Staubsauger, Kompressor, Bohrmaschine, Schleifmaschine und dergleichen) und/oder Ersatzteile in einem Ladehilfsmittel (z.B. Behälter, Box, Palette, Tablar oder dergleichen) in einem automatisierten Lager mit Lagerregalen und zumindest einem Regalbediengerät eingelagert und bei Bedarf mit Hilfe eines Regalbediengeräts und/oder mit Hilfe von Förderelementen der Förderanlage (z.B. Bereitstellförderer und/oder Heber und/oder Paternoster und/oder Rollenförderer mit motorisierten Förderrollen) an den Ort, an dem die Wartung stattfinden soll, gefördert. Das Ladehilfsmittel kann insbesondere auch eine zweite Anschlussbox mit einer Steckdose für die angesprochenen Geräte enthalten und natürlich auch ein nicht-motorisiertes Werkzeug (z.B. Schraubenschlüssel, Schraubendreher und dergleichen). Auf diese Weise kann sich Wartungspersonal an den Ort der Wartung begeben, ohne (schweres) Werkzeug schleppen zu müssen. Die Wartung der Förderanlage kann daher wesentlich komfortabler und auch effizienter durchgeführt werden, als dies bis dato möglich war.

In gleicher Weise können das Werkzeug und defekte Bauteile der Förderanlage mit diesem (oder einem anderen) Ladehilfsmittel abtransportiert werden. Insbesondere bei schweren auszutauschenden Teilen und/oder bei Wartungsarbeiten, die in großer Höhe stattfinden, kann das Wartungspersonal durch die vorgeschlagenen Maßnahmen deutlich entlastet werden. Auf die beschriebene Weise können die defekten Bauteile an einen Ort transportiert werden, wo sie leicht und gefahrlos aus dem Ladehilfsmittel entnommen und weiter abtransportiert werden können. Beispielsweise werden die defekten Bauteile einfach an einen Kommissionierarbeitsplatz transportiert und von dort aus entsorgt oder zu einer Reparaturstelle gebracht. Die defekten Bauteile können natürlich zuvor auch in ein Lagerregal der Förderanlage transportiert und dort zwischengelagert werden.

Das Ladehilfsmittel kann darüber hinaus farblich auffällig gestaltet sein oder zum Beispiel auch eine Signalleuchte (z.B. eine Rundumleuchte) aufweisen. Auf diese Weise kann Wartungspersonal an den Ort der Wartung geleitet werden. Aufwändige Wegbeschreibungen oder das Lesen komplizierter Pläne können daher entfallen.

Besonders vorteilhaft ist es weiterhin, wenn das erste/zweite Rahmenprofil mit einem Schutzleiter verbunden ist, die zweite Anschlussbox elektrisch mit dem ersten/zweiten Rahmenprofil verbunden ist und die zweite Anschlussbox ausgangsseitig einen Schutzleiteranschluss bereitstellt. Auf diese Weise können an der zweiten Anschlussbox, welche zum Beispiel eine Steckdose für 110 VAC, 230 VAC und/oder 400 VAC oder einen Anschluss für eine solche bereitstellt, auch elektrische Geräte betrieben werden, die nicht schutzisoliert sind. Denkbar ist natürlich auch, dass zu diesem Zweck ein gesonderter Schutzleiter vorgesehen ist, welcher im Speziellen Teil des Energieversorgungsbusses ist.

In einer weiteren besonderen Ausführungsform des modularen Systems beziehungsweise der Förderanlage unterscheidet sich die zweite Anschlussbox baulich von der ersten Anschlussbox. Auf diese Weise können die beiden Anschlussboxen optimal an ihren Einsatzzweck angepasst werden. Beispielsweise kann die erste Anschlussbox eine Steuerelektronik für den ersten Aktor aufweisen, wohingegen die zweite Anschlussbox keine derartige Steuerelektronik aufweist. Diese kann beispielsweise Teil des zweiten Aktors sein.

Vorteilhaft ist es aber auch, wenn die erste Anschlussbox und die zweite Anschlussbox hinsichtlich ihrer äußeren Abmessungen und/oder Anordnung von Kontakten zur Kontaktierung mit dem elektrischen Energieversorgungsbus identisch sind. Auf diese Weise können beide Typen von Anschlussboxen ohne Adaptierungen an der Förderanlage verbaut werden. Beispielsweise können beide Anschlussboxen in derselben Art und Weise mit Hilfe einer Rastverbindung auf einem Rahmenprofil befestigt (aufgeclipst) werden.

Vorteilhaft ist es zudem, wenn die erste Anschlussbox für den Anschluss des ersten Aktors eine Buchse / einen Stecker aufweist und die zweite Anschlussbox für den Anschluss des zweiten Aktors Klemmen aufweist. Auf diese Weise ist die zweite Anschlussbox wesentlich flexibler einsetzbar, da der daran angeschlossene Aktor keinen passenden Stecker / keine passende Buchse aufweisen muss. Die Klemmen der zweiten Anschlussbox können zum Beispiel als Schraubklemmen oder Federklemmen ausgebildet sein. Anstelle der Klemmen oder zusätzlich dazu kann die zweite Anschlussbox natürlich auch Buchsen und/oder Stecker aufweisen.

Günstig ist es schließlich auch, wenn die zweite elektrische Anschlussbox werkzeuglos im Bereich des ersten/zweiten Rahmenprofils montierbar ist. Auf diese Weise kann die zweite Anschlussbox besonders leicht (und insbesondere nur temporär) an der Förderanlage befestigt werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Abschnitt aus einer beispielhaften Förderanlage zum Fördern von Stückgütern in Schrägansicht;
- Fig. 2: eine Ansicht auf die Innenseite des in Fig. 1 dargestellten Abschnitts der Förderanlage;
- Fig. 3: eine erste Anschlussbox und einen Energieversorgungsbus von schräg hinten in Explosionsdarstellung;
- Fig. 4: eine erste und zweite Anschlussbox unterschiedlicher Bauart von schräg unten gesehen;
- Fig. 5: eine zweite Anschlussbox und einen Energieversorgungsbus von schräg hinten in Explosionsdarstellung;
- Fig. 6: die zweite Anschlussbox aus Fig. 5 von schräg vorne gesehen;
- Fig. 7: die zweite Anschlussbox aus Fig. 5, deren erste Vorsprünge in eine einzige Ausnehmung im Rahmenprofil ragen;
- Fig. 8: die zweite Anschlussbox aus Fig. 5, deren erste Vorsprünge in zwei verschiedene Ausnehmungen im Rahmenprofil ragen;
- Fig. 9: eine Seitenansicht der zweiten Anschlussbox aus Fig. 5 sowie einen Querschnitt durch einen Rahmenprofilteil und durch den Energieversorgungsbus gemäß der Schnittlinie X in Fig. 4;
- Fig. 10: ein beispielhaftes elektrisches Schaltbild von ersten und zweiten mit dem Energieversorgungsbus verbundenen Anschlussboxen;
- Fig. 11: einen weiteren Ausschnitt aus der beispielhaften Förderanlage von schräg oben;
- Fig. 12: die Förderanlage aus Fig. 11 von schräg unten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

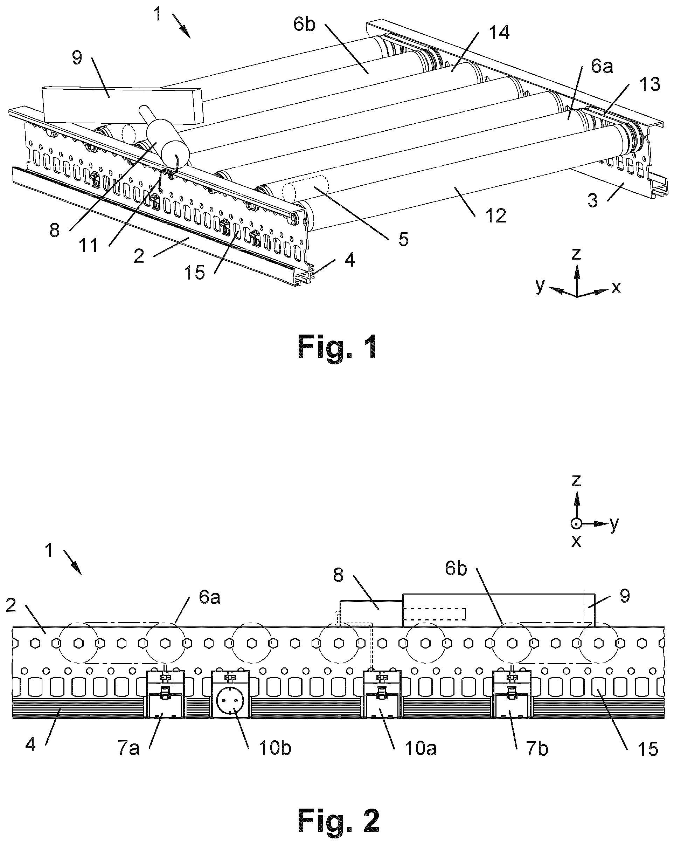

Fig. 1 zeigt ein Beispiel einer Förderanlage 1 zum Fördern von Stückgütern in Schrägansicht, beziehungsweise einen Abschnitt einer solchen Förderanlage 1. Die Fig. 2 zeigt die Innenseite der Förderanlage 1 beziehungsweise die Innenseite des besagten Abschnitts. Stückgüter sind beispielsweise Ladehilfsmittel, Behälter, Kartons, Tablare, Packeinheiten (Colli) und dergleichen.

Die Förderanlage 1 umfasst ein erstes Rahmenprofil 2 und ein zweites Rahmenprofil 3 sowie einen elektrischen Energieversorgungsbus 4, welcher entlang des ersten Rahmenprofils 2 angeordnet ist. Die Förderanlage 1 weist darüber hinaus einen ersten, als elektrischen Rotationsmotor ausgebildeten Aktor 5 zum Antrieb zumindest eines Förderelementes 6a auf, welches nach dieser Ausführung am ersten Rahmenprofil 2 und zweiten Rahmenprofil 3 gelagert ist. Konkret ist das Förderelement 6a in diesem Beispiel als Förderrolle ausgebildet, welche zwischen dem ersten und dem zweiten Rahmenprofil 2, 3 montiert ist. Denkbar wäre aber beispielsweise auch, dass das Förderelement 6a als Umlenkrolle eines Förderbands ausgebildet ist. Neben der Förderrolle 6a ist in den Figuren 1 und 2 auch eine zweite motorisierte Förderrolle 6b dargestellt. Im obigen Beispiel ist das Förderelement 6a an beiden Rahmenprofilen 2, 3 befestigt. Eine Möglichkeit ist es aber auch, das Förderelement 6a nur an einem Rahmenprofil 2, 3 (insbesondere am ersten Rahmenprofil 2) zu befestigen.

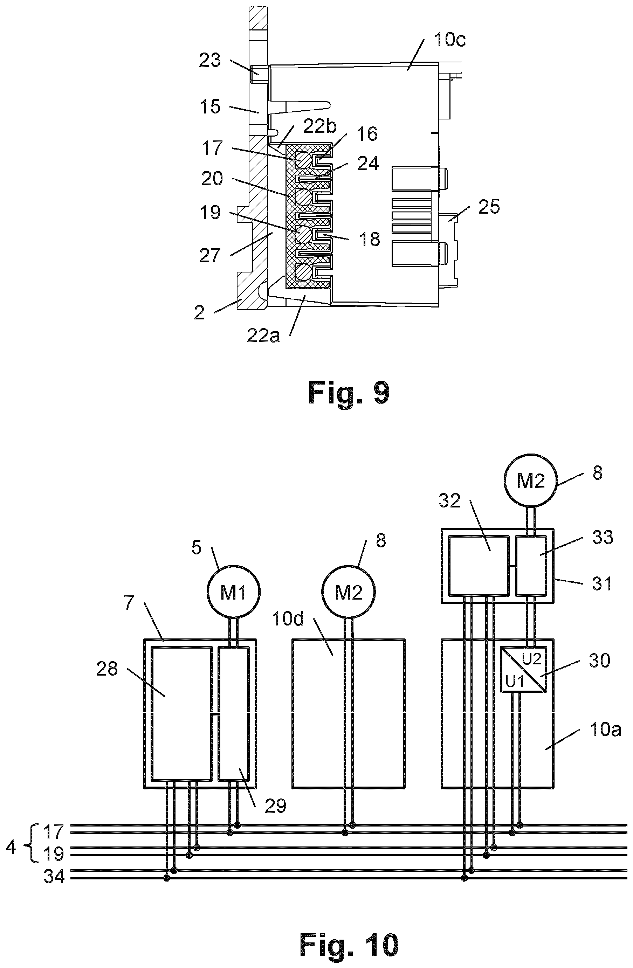

Die Förderanlage 1 umfasst darüber hinaus zwei erste elektrische Anschlussboxen 7a, 7b, mittels derer die ersten Aktoren/Motoren 5 der Förderrolle 6a, 6b an den Energieversorgungsbus 4 angeschlossen sind. Die Anschlussboxen 7a, 7b sind jeweils mit einer ersten Steuerelektronik (siehe auch Fig. 10) ausgestattet und sind an jenem ersten Rahmenprofil 2 montiert, an dem auch der elektrische Energieversorgungsbus 4 angeordnet ist.

Weiterhin umfasst die Förderanlage 1 einen zweiten elektrischen Aktor 8 zum Antrieb eines Funktionselementes 9, wobei sich der zweite elektrische Aktor 8 vom ersten elektrischen Antriebsmotor 5 hinsichtlich seiner Nennspannung unterscheidet. Konkret ist das Funktionselement 9 in dem gezeigten Beispiel als Abweiser und der zweite Aktor 8 als Linearmotor (beispielsweise als Spindelmotor) ausgebildet. Das Funktionselement 9, welches durch den zweiten Aktor 8 angetrieben wird, kann beispielsweise auch als Hubwerk, Sperrklappe, Anschlag, Beschleunigungsrolle oder ähnliches ausgebildet sein, und der zweite Aktor 8 kann natürlich auch als Rotationsmotor ausgebildet sein.

Schließlich umfasst die Förderanlage 1 auch eine zweite elektrische Anschlussbox 10a, mittels welcher der zweite Aktor 8 an den Energieversorgungsbus 4 angeschlossen ist und welche im Bereich des ersten Rahmenprofils 2 montiert ist, an dem auch der elektrische Energieversorgungsbus 4 angeordnet ist.

Durch die vorgeschlagenen Maßnahmen können insbesondere firmenfremde, zweite Aktoren 8 leicht in eine Förderanlage 1 eingebunden werden, wobei die Nennleistung des zweiten Aktors 8 die Nennleistung des Energieversorgungsbusses 4 nicht übersteigen sollte. Eine gesonderte Verkabelung, welche nur für den zweiten Aktor 8 entlang des ersten Rahmenprofils 2 geführt ist, so wie dies nach dem Stand der Technik nötig ist, kann daher entfallen. Es ist lediglich ein relativ kurzes Verbindungskabel 11 zwischen dem zweiten Aktor 8 und der zweiten Anschlussbox 10a nötig.

Neben den bereits angesprochenen Bauteilen umfasst die Förderanlage 1 passiv angetriebene Förderrollen 12, welche zwar über keinen eigenen Motor 5 verfügen, welche aber über Riemen 13 von den Förderrollen 6a, 6b mit angetrieben werden. Darüber hinaus sind auch leerlaufende Rollen 14 vorgesehen, die überhaupt nicht angetrieben werden. Eine Möglichkeit besteht natürlich auch darin, dass alle Förderrollen 6a, 6b der Förderanlage 1 mit jeweils einem Motor 5 ausgestattet sind.

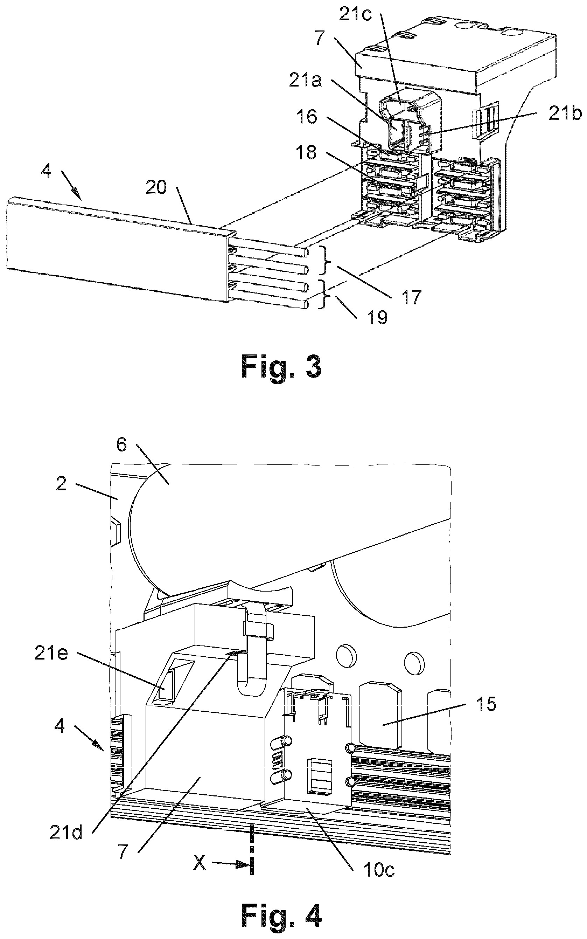

Schließlich weisen die Rahmenprofile 2, 3 mehrere in Längsrichtung voneinander beabstandete Ausnehmungen 15 auf, in welche die ersten Anschlussboxen 7a, 7b und auch die zweite Anschlussbox 10a hineinragen. Dies dient einerseits der Fixierung der ersten Anschlussboxen 7a, 7b und der zweiten Anschlussbox 10a in Längsrichtung des ersten Rahmenprofils 2, andererseits kann auf diese Weise auch ein elektrischer Anschluss der ersten Anschlussboxen 7a, 7b und/oder zweiten Anschlussbox 10a an die Außenseite des ersten Rahmenprofils 2 geführt werden (siehe auch Fig. 3).

Das erste und zweite Rahmenprofil 2, 3 sind zueinander im Wesentlichen spiegelverkehrt ausgebildet. Gegebenenfalls kann das erste Rahmenprofil 2 daher an die Stelle des zweiten Rahmenprofils 3 treten und umgekehrt. Zum Beispiel könnten der elektrische Energieversorgungsbus 4, die ersten Anschlussboxen 7a, 7b und die zweite elektrische Anschlussbox 10a auch am zweiten Rahmenprofil 3 befestigt sein.

In der Fig. 2 ist eine weitere Bauform einer zweiten Anschlussbox 10b gezeigt, welche eine Steckdose zum Anschluss eines elektrischen Geräts bereitstellt. Die Steckdose kann dabei beispielsweise nach DIN VDE 0620-1 ausgebildet sein und einer herkömmlichen, auch im Haushalt gebräuchlichen Steckdose entsprechen. Aus dem Gesagten wird klar, dass der zweite Aktor 8 nicht notgedrungen permanent an den Energieversorgungsbus 4 angeschlossen sein muss und auch nicht fix mit der Förderanlage 1 verbunden sein muss. Auf den Einsatzbereich der Steckdose und die möglichen Bauformen einer zweiten Anschlussbox 10b wird später noch im Detail eingegangen.

In dem in den Figuren 1 und 2 gezeigten Beispiel sind die zweiten elektrischen Anschlussboxen 10a, 10b in derselben Weise am ersten Rahmenprofil 2 montiert und mit dem elektrischen Energieversorgungsbus 4 verbunden wie die erste Anschlussboxen 7a, 7b. Dadurch erfolgt die Montage der Förderanlage 1 besonders intuitiv, da im Hinblick auf die Befestigung der ersten und zweiten Anschlussboxen 7a, 7b und 10a, 10b auf dem ersten Rahmenprofil 2 nicht zwischen den ersten Anschlussboxen 7a, 7b und den zweiten Anschlussboxen 10a, 10b unterschieden werden muss. Grundsätzlich kann eine zweite Anschlussbox 10a, 10b aber auch anders am ersten Rahmenprofil 2 montiert und mit dem elektrischen Energieversorgungsbus 4 verbunden sein als die ersten Anschlussboxen 7a, 7b (siehe die Figuren 4 bis 9).

Die Fig. 3 zeigt die erste Anschlussbox 7 nun von schräg hinten in Explosionsdarstellung mit dem Energieversorgungsbus 4. Das erste Rahmenprofil 2 ist in der Fig. 3 nicht dargestellt. Die erste Anschlussbox 7 weist erste Kontakte 16 auf, welche den Kontakt zu einem ersten Spannungsbus 17 herstellen und zweite Kontakte 18, welche den elektrischen Kontakt zu einem zweiten Spannungsbus 19 herstellen. In dem dargelegten Beispiel weist der erste Spannungsbus 17 zwei elektrische Leiter (hier Drähte) auf, welche in ein Kunststoffprofil 20 eingerastet beziehungsweise eingeclipst sind. Dementsprechend weist der zweite Spannungsbus 19 zwei weitere elektrische Leiter auf, welche ebenfalls durch Drähte gebildet sind und welche ebenfalls in das ein Kunststoffprofil 20 eingerastet beziehungsweise eingeclipst sind.

In dem konkreten Beispiel umfasst der Energieversorgungsbus 4 ein Kunststoffprofil 20 (einen Isolator), welcher in Längsrichtung des Kunststoffprofils 20 verlaufende und durch Trennstege voneinander distanzierte Aufnahmen ausbildet. Die Aufnahmen im Kunststoffprofil 20 sind längsseitig offen, und in je einer Aufnahme ist je ein elektrischer Leiter gelagert. Darüber hinaus weisen die Trennstege selbst in Längsrichtung des Kunststoffprofils 20 verlaufende Längsschlitze beziehungsweise Längsnuten aus, in welche zweite Vorsprünge 24 der zweite Anschlussbox 10a..10c hineinragen können, wenn die zweite Anschlussbox 10a..10c am Energieversorgungsbus 4 montiert ist (siehe auch Fig. 9).

Das Einclipsen der genannten Drähte ist zwar vorteilhaft, jedoch nicht die einzig vorstellbare Möglichkeit. Die Drähte könnten beispielsweise auch in das Kunststoffprofil 20 eingebettet sein und insbesondere vom Kunststoff des Kunststoffprofils 20 umspritzt sein. Das Kunststoffprofil 20 und die elektrischen Leiter des ersten und zweiten Spannungsbusses 17 und 19 sind Teil des Energieversorgungsbusses 4.

Die ersten und zweiten Kontakte 16 und 18 sind in diesem Beispiel als Federkontakte ausgebildet, wodurch sich ein geringer Übergangswiderstand ergibt. Zudem sind jeweils zwei mechanisch voneinander unabhängige Kontakte 16 und 18 für die Kontaktierung eines elektrischen Leiters vorgesehen. Dadurch kann die Stromübertragung noch besser und noch sicherer erfolgen. Selbstverständlich ist es aber auch möglich, dass nur ein Kontakt pro elektrischem Leiter vorgesehen ist und/oder dass Kontakte 16, 18 anderer Bauart eingesetzt werden. Die Kontakte 16, 18 leiten die vom ersten und zweiten Spannungsbus 17, 19 abgenommene elektrische Spannung an eine im Inneren der ersten Anschlussbox 7 liegende elektronische Schaltung und/oder an Anschlüsse der ersten Anschlussbox 7 weiter.

Eine Anschlussbuchse 21a, welche an der ersten Anschlussbox 7 vorgesehen sein kann, dient dem Anschluss eines Datenübertragungskabels, insbesondere eines Datenbussystems (vergleiche auch Fig. 10). Eine weitere optionale Anschlussbuchse 21b dient dem Anschluss eines weiteren Datenübertragungskabels, das an seinem anderen Ende mit einer weiteren ersten Anschlussbox 7 verbunden ist. Solcherart wird ein Datensignal auf einfache Weise an die ersten Anschlussboxen 7 verteilt. Darüber hinaus kann die erste Anschlussbox 7 auch eine Anschlussbuchse 21c aufweisen, an der ein Sensor angeschlossen werden kann, beispielweise zur Erfassung eines Stückguts. Die Anschlussbuchsen 21a..21c ragen in diesem Beispiel durch die Ausnehmung 15 im ersten Rahmenprofil 2 hindurch.

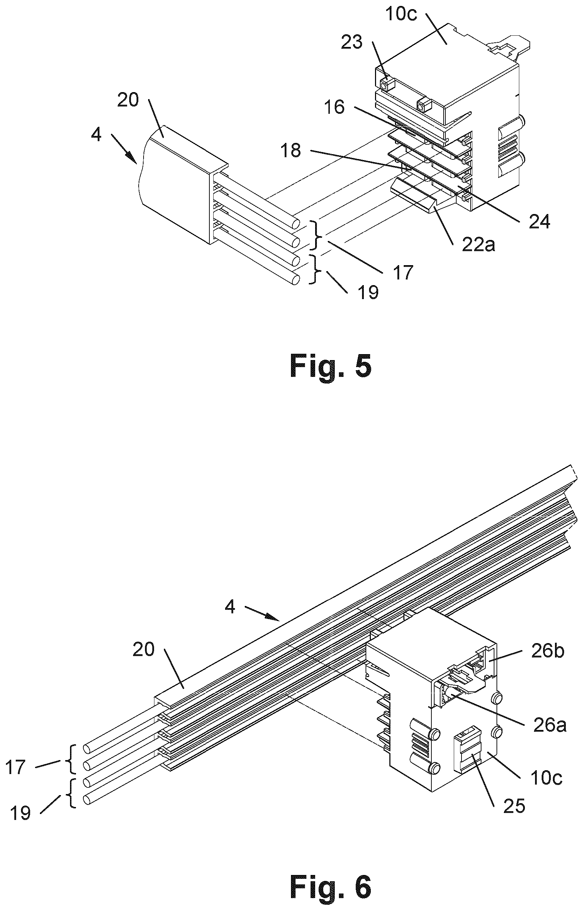

Generell ist es von Vorteil, wenn die erste Anschlussbox 7, 7a, 7b für den Anschluss des ersten Aktors 5 eine Buchse / einen Stecker aufweist und die zweite Anschlussbox 10a, 10b für den Anschluss des zweiten Aktors 8 Klemmen aufweist. Auf diese Weise ist die zweite Anschlussbox 10a, 10b wesentlich flexibler einsetzbar, da der daran angeschlossene zweite Aktor 8 keinen passenden Stecker / keine passende Buchse aufweisen muss. Die Klemmen der zweiten Anschlussbox 10a, 10b können zum Beispiel als Schraubklemmen oder Federklemmen ausgebildet sein. Selbstverständlich kann die zweite Anschlussbox 10a, 10b zusätzlich oder alternativ zu den Klemmen ebenfalls eine Buchse und/oder einen Stecker aufweisen (siehe auch Fig. 6).

Die ersten Anschlussboxen 7, 7a, 7b und die zweiten Anschlussboxen 10, 10a, 10b sind in einer weiteren möglichen Ausführungsform der Förderanlage 1 hinsichtlich ihrer äußeren Abmessungen und/oder Anordnung von Kontakten 16, 18 zur Kontaktierung mit dem elektrischen Energieversorgungsbus 4 identisch. Das heißt, dass das zu Fig. 3 im Hinblick auf die erste Anschlussbox 7 Gesagte uneingeschränkt auch für die zweiten Anschlussboxen 10a, 10b gültig ist. Auf die besagte Weise können beide Typen von Anschlussboxen 7a, 7b und 10a, 10b ohne Adaptierungen an der Förderanlage 1 verbaut werden. Beispielsweise können beide Anschlussboxen 7a, 7b und 10a, 10b in derselben Art und Weise mit Hilfe einer Rastverbindung auf dem Rahmenprofil 2 befestigt (aufgeclipst) werden.

Grundsätzlich kann sich eine zweite Anschlussbox 10a, 10b von der ersten Anschlussbox 7, 7a, 7b aber auch baulich unterscheiden. Die Fig. 4 zeigt dazu einen Ausschnitt aus einer Förderanlage 1 von innen beziehungsweise von schräg unten. In der Fig. 4 ist eine erste Anschlussbox 7 neben einer zweiten Anschlussbox 10c anderer Bauart dargestellt. Durch die vorgeschlagenen Maßnahmen können die ersten und zweiten Anschlussboxen 7, 7a, 7b und 10c optimal an ihren Einsatzzweck angepasst werden.

In der Fig. 4 ist insbesondere auch gut der elektrische Anschluss des Motors 5 der Förderrolle 6 an der ersten Anschlussbox 7 über eine Anschlussbuchse 21d zu sehen. Es kann auch eine zusätzliche Anschlussbuchse 21e an der ersten Anschlussbox 7 vorgesehen werden, an welche ein weiterer Antrieb angeschlossen werden kann (nicht dargestellt).

In Anlehnung an die Fig. 3 zeigt die Fig. 5 eine zweite Anschlussbox 10c und den Energieversorgungsbus 4 von schräg hinten in Explosionsdarstellung. Das zu Fig. 3 Gesagte gilt in äquivalenter Weise auch sinngemäß für die in Fig. 5 dargestellte Anordnung, welche in der Fig. 6 zusätzlich von der anderen Seite her gesehen gezeigt ist.

Die in den Figuren 5, 6 und 9 dargestellte zweite Anschlussbox 10c weist Rastnasen 22a, 22b auf, mit deren Hilfe die zweite Anschlussbox 10c auf dem Energieversorgungsbus 4 montiert (das heißt auf diesen aufgeclipst) wird. Insbesondere ist die zweite Anschlussbox 10c mechanisch nur mit dem elektrischen Energieversorgungsbus 4 verbunden. Das heißt, dass die zweite Anschlussbox 10c nicht direkt mit dem ersten Rahmenprofil 2 verbunden ist, sondern nur indirekt über den am ersten Rahmenprofil 2 montierten Energieversorgungsbus 4. Die Rastnasen 22a, 22b können dabei mit den elektrischen Leitern 17, 19 des Energieversorgungsbusses 4 zusammenwirken und/oder - wie in den Fig. 5, 6 und 9 dargestellt - mit einem Isolator desselben, der beispielsweise durch das Kunststoffprofil 20 gebildet ist, in dem die elektrischen Leiter 17, 19 des Energieversorgungsbusses 4 eingebettet oder eingeclipst sind. Dabei umgreifen die Rastnasen 22a, 22b das Kunststoffprofil 20 formschlüssig an dessen Ober- und Unterseite. Denkbar ist natürlich auch, dass die zweite Anschlussbox 10c nur eine Rastnase 22a aufweist und anstelle der Rastnase 22b eine Hinterschneidung vorgesehen ist.

Das heißt, dass die zweite elektrische Anschlussbox 10c durch die vorgeschlagenen Maßnahmen sowohl elektrisch als auch mechanisch mit dem elektrischen Energieversorgungsbus 4 (und nur mit diesem) verbunden ist. Mit Hilfe der Rastnasen 22a, 22b kann die zweite elektrische Anschlussbox 10c insbesondere werkzeuglos auf dem Energieversorgungsbus 4 im Bereich des ersten Rahmenprofils 2 montiert werden. Die Demontage kann ebenfalls werkzeuglos erfolgen, oder es ist gegebenenfalls ein Werkzeug heranzuziehen, zum Beispiel ein Schraubendreher zur Entriegelung der Rastnasen 22a, 22b.

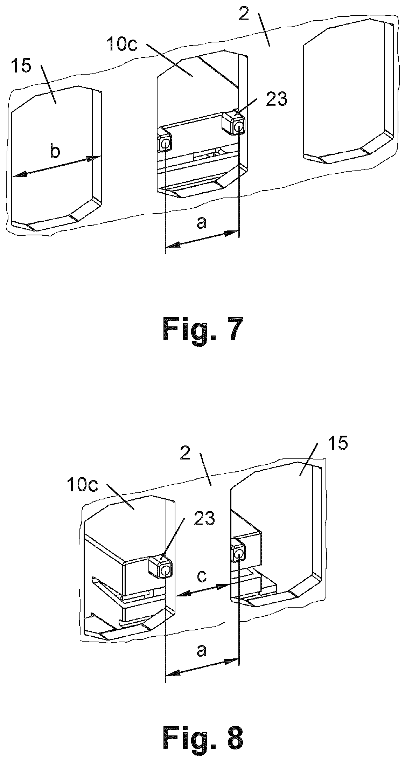

Zudem weist die zweite Anschlussbox 10c zwei in Längsrichtung des ersten Rahmenprofils 2 voneinander beabstandete, erste Vorsprünge 23 auf, welche in eine Ausnehmung 15 oder in mehrere Ausnehmungen 15 des ersten Rahmenprofils 2 hineinragen, so wie dies in den Figuren 7 und 8 dargestellt ist. Der (Mitten)abstand a zwischen den ersten Vorsprüngen 23 ist dabei kleiner als die in Längsrichtung des ersten Rahmenprofils 2 gemessene Breite b einer Ausnehmung 15, jedoch größer als der Abstand c zwischen zwei Ausnehmungen 15. Auf diese Weise kann die zweite Anschlussbox 10c in der Längsrichtung des ersten Rahmenprofils 2 örtlich festgelegt werden. Die beiden Vorsprünge 23 der zweiten Anschlussbox 10c ragen dabei entweder in dieselbe Ausnehmung 15 des Rahmenprofils 2 (siehe Fig. 7) oder in benachbarte Ausnehmungen 15 (siehe Fig. 8). In letzterem Fall liegt ein zwischen den beiden Ausnehmungen 15 liegender Steg des Rahmenprofils 2 zwischen den beiden Vorsprüngen 23.

Im Speziellen kann der Außenabstand der beiden ersten Vorsprünge 23 - wie in den Figuren 7 und 8 dargestellt - im Wesentlichen der Breite b einer Ausnehmung 15 und der Innenabstand der beiden ersten Vorsprünge 23 im Wesentlichen dem Abstand c zwischen zwei Ausnehmungen 15 entsprechen. Dadurch wird eine Verschiebung der zweiten Anschlussbox 10c in Längsrichtung des ersten Rahmenprofils 2 praktisch völlig ausgeschlossen. Das örtliche Festlegen der zweiten Anschlussbox 10c ist zwar vorteilhaft, jedoch nicht zwingend. Denkbar ist vielmehr auch, dass die zweite Anschlussbox 10c keine solchen Vorsprünge 23 aufweist und in Längsrichtung des ersten Rahmenprofils 2 frei verschiebbar ist.

Darüber hinaus weist die zweite Anschlussbox 10c auch zweite Vorsprünge 24 auf, welche im montierten Zustand zwischen den elektrischen Leitern 17, 19 des Energieversorgungsbusses 4 liegen. Konkret ragen die zweiten Vorsprünge 24 in Längsschlitze hinein, die sich in den Trennstegen des Kunststoffprofils 20 zwischen den Leitern 17, 19 befinden. Dadurch werden die elektrischen Leiter 17, 19 im Bereich der zweiten Anschlussbox 10c besonders gut positioniert und werden insbesondere gut in dem Kunststoffprofil 20 gehalten, in das die elektrischen Leiter 17, 19 eingeclipst sind. Die Wirkungsweise ist im Speziellen in der Fig. 9 gut zu sehen, in welcher ein Teilabschnitt des ersten Rahmenprofils 2 und der Energieversorgungsbus 4 im Querschnitt X (vergleiche Fig. 4) dargestellt sind. Gut zu sehen ist auch die Wirkungsweise der Rastnasen 22a, 22b und dass der Energieversorgungsbus 4 mit Hilfe von Abstandshaltern 27 etwas beabstandet vom ersten Rahmenprofil 2 befestigt ist. Dies ist zwar vorteilhaft aber nicht zwingend. Denkbar ist vielmehr auch, dass der Energieversorgungsbus 4 direkt am ersten Rahmenprofil 1 montiert ist. Die oberen und unteren Flanken des Kunststoffprofils 20 können dabei insbesondere hinterschnitten ausgebildet sein, um das Aufrasten der zweiten Anschlussbox 10c zu ermöglichen.

Die in den Figuren 4 bis 9 dargestellte zweite Anschlussbox 10c weist zudem auch einen Halter 25 auf, an welchem ein Kabelbinder befestigt werden kann, um ein zum zweiten Aktor 8 führendes Kabel 11 befestigen beziehungsweise sichern zu können. Bevorzugt weist der Halter 25 eine Öffnung auf, durch welche ein Kabelbinder gefädelt werden kann.

Schließlich weist die zweite Anschlussbox 10c zwei Anschlussbuchsen 26a, 26b zum Anschluss von zweiten Aktoren 8 auf. Die Anschlussbuchse 26a, 26b dient im Speziellen der Spannungsversorgung des zweiten Aktors 8. Zu diesem Zweck können beide Anschlussbuchsen 26a, 26b mit dem ersten Spannungsbus 17 verbunden sein, oder beide Anschlussbuchsen 26a, 26b sind mit dem zweiten Spannungsbus 19 verbunden. Denkbar ist auch, dass die Anschlussbuchse 26a mit dem ersten Spannungsbus 17 und die Anschlussbuchse 26b mit dem zweiten Spannungsbus 19 verbunden ist. Die beiden Anschlussbuchsen 26a, 26b können auch mit einem oder mehreren (unterschiedlichen) Ausgängen eines Spannungswandlers verbunden sein. Die an den beiden Anschlussbuchsen 26a, 26b anliegenden Spannung kann gleich oder unterschiedlich sein. Insbesondere kann an der Anschlussbuchsen 26a eine Spannung von 24 V anliegen und an der Anschlussbuchse 26b eine Spannung von 48 V. Selbstverständlich können auch weniger oder mehr als zwei Anschlussbuchsen 26a, 26b vorgesehen sein. Eine Anschlussbuchse 26a, 26b kann auch mit einem Datenbus verbunden sein. Die oben genannten Möglichkeiten sind auch in der Fig. 10 nochmals verdeutlicht. Zudem wird angemerkt, dass das zu den Anschlussbuchsen 26a, 26b Gesagte sinngemäß auch auf Stecker und Klemmen der zweiten Anschlussbox 10c anwendbar ist.

Die Fig. 10 zeigt nun ein schematisches, elektrisches Schaltbild einer beispielhaften Förderanlage 1. Das Schaltbild zeigt konkret den Energieversorgungbus 4, welcher den ersten Spannungsbus 17 und den zweiten Spannungsbus 19 aufweist. Die erste Anschlussbox 7 umfasst eine Rollensteuerung 28 und eine Antriebssteuerung 29. Die Antriebssteuerung 29 ist mit dem ersten Spannungsbus 17 und mit dem Rollenmotor 5 verbunden. Beispielsweise kann die Antriebssteuerung 29 eine elektronische Schaltung zum Betrieb des Rollenmotors 5 beinhalten, etwa eine H-Brücke und/oder einen Umrichter zur Erzeugung eines Drehfelds. Die Rollensteuerung 28 beinhaltet typischerweise ein Kommunikationsmodul zur Kommunikation mit einer zentralen Steuerung (nicht dargestellt) sowie einen Mikroprozessor, welche unter anderem aus den empfangenen Befehlen Steuersignale für die Antriebssteuerung 29 ableitet. Über die in der Fig. 10 zwischen der Rollensteuerung 28 und der Antriebssteuerung 29 gezeigte Verbindungslinie werden somit insbesondere Signale an die Steueranschlüsse der Leistungstransistoren (also zum Beispiel an die Basis oder das Gate eines Transistors) in der Antriebssteuerung 29 übertragen.

Die Rollensteuerung 28 ist in diesem Beispiel mit dem zweiten Spannungsbus 19 verbunden. Der Motor 5 ist dagegen (leistungsmäßig) im Wesentlichen mit dem ersten Spannungsbus 17 verbunden. Im Hinblick auf die Funktion der Rollensteuerung 28 und der Antriebssteuerung 29 kann der erste Spannungsbus 17 auch als "Leistungsspannungsbus" und der zweite Spannungsbus 19 auch als "Steuerspannungsbus" angesehen beziehungsweise bezeichnet werden.

"Leistungsmäßig im Wesentlichen mit dem ersten Spannungsbus verbunden" bedeutet insbesondere nicht, dass die gesamte an den Motor 5 übertragene, elektrische Leistung aus der Antriebssteuerung 29 stammen muss. Ein kleiner Teil kann auch aus der Rollensteuerung 28 beigetragen werden, was insbesondere dann zutrifft, wenn für die Ansteuerung des Motors 5 Bipolartransistoren verwendet werden. Typischerweise beträgt der aus der Rollensteuerung 28 beziehungsweise aus dem zweiten Spannungsbus 19 stammende Anteil jedoch weniger als 5%. Mit anderen Worten stammen insbesondere mehr als 95% der an den Aktor 5 übertragenen, elektrischen Leistung aus der Antriebssteuerung 29 beziehungsweise aus dem ersten Spannungsbus 17.

In einer Variante der Erfindung dient der zweite Spannungsbus 19 lediglich der Energieversorgung, wohingegen Daten per Funk oder auch, wie in der Fig. 10 dargestellt, über einen gesonderten Datenbus 34 übertragen werden (siehe auch die Buchsen 21a, 21b in Fig. 3). Daten können aber grundsätzlich auch auf den zweiten Spannungsbus 19 aufmoduliert sein (Powerline-Communication).

Durch die vorgeschlagenen Maßnahmen können die in einer Förderanlage 1 verbauten Komponenten hinsichtlich ihrer Energieversorgung voneinander entkoppelt werden. Beispielsweise sind, wie in der Fig. 10 dargestellt, relative leistungsstarke Aktoren 5 am ersten Spannungsbus 17 angeschlossen, wohingegen die Rollensteuerungen 28 mit geringem Leistungsbedarf am zweiten Spannungsbus 19 angeschlossen sind. Dadurch werden die Rollensteuerungen 28 vom ersten Spannungsbus 17 entkoppelt. Störungen auf dem ersten Spannungsbus 17, beispielsweise verursacht durch die Antriebssteuerung 29 (z.B. eine drehfelderzeugende und leistungsvariable Schaltung zum Antrieb eines bürstenlosen Motors 5), wirken sich daher nicht auf die Rollensteuerungen 28 aus. Insbesondere werden die Rollensteuerungen 28 selbst bei einem Totalausfall des ersten Spannungsbusses 17 nicht beeinträchtigt und können weiterhin Signale für die Positionsbestimmung von beförderten Objekten liefern und speichern (beispielsweise kann ein Hallsensor des Motors 5 an die Rollensteuerung 28 angeschlossen sein). Ein Wiederhochfahren der Förderanlage 1 wird dadurch erleichtert. Insbesondere kann die Nennleistung des ersten Spannungsbusses 17 die Nennleistung des zweiten Spannungsbusses 19 um mindestens das Zehnfache übersteigen.

In einer besonderen Ausführungsform der Förderanlage 1 ist auch die Nennspannung des ersten Spannungsbusses 17 von der Nennspannung des zweiten Spannungsbusses 19 unterschiedlich und übersteigt diese insbesondere um mindestens das Zweifache. Insbesondere kann am ersten Spannungsbus 17 eine Spannung von 48 VDC und am zweiten Spannungsbus 19 eine Spannung von 24 VDC anliegen. Selbstverständlich können die Spannungen am ersten Spannungsbus 17 und am zweiten Spannungsbus 19 auch anders sein, und diese können auch eine Wechselspannung führen.

Dadurch können die über den ersten Spannungsbus 17 übertragenen Ströme trotz vergleichsweise hoher elektrischer Leistung gering gehalten werden, wodurch auch die Kabelquerschnitte klein bleiben. Insbesondere unterscheiden sich die Leiterquerschnitte des ersten Spannungsbusses 17 und des zweiten Spannungsbusses 19 um maximal das Zweifache, oder diese sind überhaupt gleich (so wie dies bei den in den Figuren 1 bis 9 dargestellten Beispielen der Fall ist), wodurch die Kontaktierung der ersten und zweiten Anschlussbox 7, 7a, 7b und 10a..10c erleichtert wird.

Beispielsweise kann die erste Anschlussbox 7 eine Steuerelektronik (im dargestellten Fall also die Rollensteuerung 28 und die Antriebssteuerung 29) für den ersten Aktor 5 aufweisen, wohingegen die zweite Anschlussbox 10a..10c keine derartige Steuerelektronik aufweist. Diese kann beispielsweise Teil des zweiten Aktors 8 sein.

Ein von einem Versorgungsmodul (z.B. Spannungsversorgung oder Netzteil) versorgter Förderabschnitt kann zum Beispiel fünfzig oder mehr motorisierte Förderrollen 6a, 6b aufweisen. Der Leistungsbedarf der Förderrollen 6a, 6b und damit die Nennleistung des genannten Versorgungsmoduls können bei der Planung beziehungsweise der Entwicklung einer Förderanlage 1 gut abgeschätzt werden, wohingegen der Leistungsbedarf der zweiten Aktoren 8 bei der Entwicklung einer Förderanlage 1 unter Umständen noch unbekannt ist und sich in der Planungsphase durch Kundenanforderungen ergibt. Um entsprechend flexibel auf Kundenwünsche reagieren zu können, ist es von Vorteil, wenn die Kontakte 16, 18 der ersten Anschlussbox 7, welche die elektrische Verbindung zum Energieversorgungsbus 4 herstellen, zur Übertragung eines Nennstroms / einer Nennleistung des ersten Aktors 5 ausgebildet sind und Kontakte 16, 18 der zweiten Anschlussbox 10a..10c, welche die elektrische Verbindung zum Energieversorgungsbus 4 herstellen, zur Übertragung eines Nennstroms / einer Nennleistung des Energieversorgungsbusses 4 ausgebildet sind. Dadurch kann zum zweiten Aktor 8 eine deutlich größere elektrische Leistung übertragen werden als zum ersten Aktor 5. Für das erwähnte Beispiel bedeutet dies, dass über die zweite Anschlussbox 10a..10c das Fünfzigfache der elektrischen Leistung der ersten Anschlussbox 7, 7a, 7b übertragen werden kann.

Von Vorteil ist es aber auch, wenn die Kontakte 16, 18 der ersten Anschlussbox 7, 7a, 7b, welche die elektrische Verbindung zum Energieversorgungsbus 4 herstellen, und die Kontakte 16, 18 der zweiten Anschlussbox 10a..10c, welche die elektrische Verbindung zum Energieversorgungsbus 4 herstellen, zur Übertragung eines Nennstroms / einer Nennleistung des Energieversorgungsbusses 4 ausgebildet sind. Auf diese Weise können dieselben Kontakte 16, 18 für die erste Anschlussbox 7, 7a, 7b und die zweite Anschlussbox 10a..10c verwendet werden, wodurch sich durch die Standardisierung unter Umständen Kostenvorteile im Gesamtsystem ergeben, obwohl die Kontakte 16, 18 der ersten Anschlussbox 7, 7a, 7b aus technischer Sicht eigentlich überdimensioniert sind.

Insbesondere kann sich die Kontaktgröße in den beiden obigen Beispielen auf den ersten Spannungsbus 17 respektive die ersten Kontakte 16 beziehen.

In der Fig. 10 sind zwei Beispiele für zweite elektrische Anschlussboxen dargestellt. Die in der Fig. 10 rechts dargestellte, zweite Anschlussbox 10a ist wie die erste Anschlussbox 7 mit dem ersten Spannungsbus 17, dem zweiten Spannungsbus 19 und dem Datenbus 34 verbunden. Die zweite Anschlussbox 10a weist aber keine Steuerungen 28, 29 auf, sondern die einzige in der zweiten Anschlussbox 10a angeordnete elektronische Schaltung ist ein Spannungswandler 30. Auf diese Weise ist der an die zweite Anschlussbox 10a angeschlossene zweite Aktor 8 unabhängig von der Spannung am ersten Spannungsbus 17. Der Spannungswandler 30 kann als Abwärtswandler, Aufwärtswandler oder kombinierter (einstellbarer) Spannungswandler ausgebildet sein. Der Spannungswandler 30 kann weiterhin auf fixe Werte (etwa 5 V, 12 V, 24 V, 48 V) oder auch variabel einstellbar sein. Zudem kann die Ausgangsspannung eine Gleichspannung oder eine Wechselspannung sein. Das heißt der Spannungswandler 30 kann in einer vorteilhaften Ausführungsvariante - je nach Spannung auf dem ersten Spannungsbus 17 - eine Gleichspannung in eine Wechselspannung wandeln oder umgekehrt.

Durch die vorgeschlagenen Maßnahmen können auch zweite Aktoren 8 in der Förderanlage 1 verbaut werden, welche hinsichtlich ihrer Nennspannung eigentlich ungeeignet sind. Dadurch können auf vergleichsweise einfache Weise Spezialanfertigungen, beispielsweise auf Kundenwunsch, realisiert werden.

Insbesondere kann es auch von Vorteil sein, wenn der zweite Aktor 8 über die zweite Anschlussbox 10a leistungsmäßig im Wesentlichen (oder auch ausschließlich) am ersten Spannungsbus 17 angeschlossen ist, so wie dies in der Fig. 10 dargestellt ist. Zudem kann es vorteilhaft sein, wenn die von der zweiten Anschlussbox 10a an den zweiten Aktor 8 weitergeleitete Versorgungsspannung U2 der Spannung am zweiten Spannungsbus 19 entspricht. Durch die vorgeschlagenen Maßnahmen wird der zweite Spannungsbus 19 von leistungsstarken Verbrauchern und von diesen verursachten Störungen frei gehalten, selbst dann, wenn sich der zweite Spannungsbus 19 hinsichtlich seiner Nennspannung für den Anschluss des zweiten Aktors 8 anbieten würde.

Zur Ansteuerung des zweiten Aktors 8 ist in der Fig. 10 weiterhin eine Steuerung 31 für den zweiten Aktor 8 vorgesehen, welche eine Klappensteuerung 32 und eine Antriebssteuerung 33 umfasst. Die Antriebssteuerung 33 entspricht in ihrer Funktion in etwa der Antriebssteuerung 29 für den ersten Aktor 5, die Klappensteuerung 32 in etwa der Rollensteuerung 28. Der zweite Aktor 8 ist in diesem Fall leistungsmäßig im Wesentlichen mit dem ersten Spannungsbus 17 verbunden (d.h. insbesondere stammen mehr als 95% der an den zweiten Aktor 8 übertragenen, elektrischen Leistung aus dem ersten Spannungsbus 17). Die Steuerung 31 für den zweiten Aktor 8 ist jedoch nicht Teil der zweiten Anschlussbox 10a, sondern als gesondertes Teil vorgesehen. Beispielsweise wird diese vom Anbieter des zweiten Aktors 8 bereitgestellt oder ist auch überhaupt Teil des zweiten Aktors 8. Die Spannung des zweiten Spannungsbusses 19 und der Datenbus 34 werden von der zweiten Anschlussbox 10a daher transparent an die Steuerung 31 für den zweiten Aktor 8 weitergeleitet.

Denkbar ist in einer Variante der Erfindung auch, dass das Datensignal für die Klappensteuerung 32 über ein an die erste Anschlussbox 7 angeschlossenes Datenkabel bereitgestellt wird. Die Steuerung 31 ist dann sowohl mit einer ersten Anschlussbox 7 als auch mit einer zweiten Anschlussbox 10a verbunden. Prinzipiell könnte die Funktion der Klappensteuerung 32 ebenfalls von der ersten Anschlussbox 7 bereitgestellt werden. Über das an der ersten Anschlussbox 7 angeschlossene und mit der Steuerung 31 verbundene Datenkabel könnten dann Steuersignale für die Antriebssteuerung 33 übertragen werden.

Eine weitere in der Fig. 10 dargestellte Bauart einer zweiten Anschlussbox 10d leitet lediglich die Spannung des ersten Spannungsbusses 17 an den zweiten Aktor weiter. Der zweite Aktor 8 ist somit über die zweite Anschlussbox 10d ausschließlich am ersten Spannungsbus 17 angeschlossen.

Eine weitere Spezialausführung der zweiten Anschlussbox 10b weist eine Steckdose auf oder ist für den Anschluss einer solchen ausgebildet (siehe Fig. 2). In der zweiten Anschlussbox 10b ist dann ein Spannungswandler 30 angeordnet, welche eine Ausgangswechselspannung von 110 VAC und/oder 230 VAC und/oder 400 VAC bereitstellt.

Auf diese Weise können bei Revisionen der Förderanlage 1 beispielsweise Standard-Geräte (Reinigungsgeräte, Staubsauger, Kompressor, Bohrmaschine, Schleifmaschine und dergleichen) kurzzeitig an der Förderanlage 1 angeschlossen werden, ohne dass überlange Verlängerungskabel benötigt werden. Da die Förderanlage 1 bei der Revision ohnehin still steht, können die angeschlossenen Verbraucher die gesamte Nennleistung des Energieversorgungsbusses 4 beziehen. Beispielsweise kann eine Eingangsgleichspannung von 48 VDC in eine Ausgangswechselspannung von 230 VAC gewandelt werden.

In diesem Zusammenhang ist es auch denkbar, dass zweite Anschlussboxen 10a, 10b, welche eine gefährliche Ausgangsspannung bereitstellen (insbesondere größer als 48 V), nur im Wartungsfall aktiv geschaltet werden. Im Regelbetrieb bleiben sie jedoch inaktiv. Beispielsweise kann dies durch ein Relais erfolgen, dass durch einen entsprechenden Befehl einer zentralen Steuerung anzieht oder abfällt. Dieses Relais kann Teil der zweiten Anschlussbox 10a, 10b sein. Insbesondere kann der als einzige elektronische Schaltung in der zweiten Anschlussbox 10a, 10b angeordnete Spannungswandler 30 eine solche Schaltmöglichkeit aufweisen.

Denkbar ist weiterhin, dass zweite Anschlussboxen 10a, 10b, welche eine gefährliche Ausgangsspannung bereitstellen (insbesondere größer als 48 V), überhaupt nur temporär an der Förderanlage 1 montiert werden, beispielsweise für die Dauer einer Wartung. Beispielsweise kann das Wartungspersonal eine solche zweite Anschlussbox 10a, 10b mitführen und am Ort der Wartung temporär montieren. Dadurch kann auf Verlängerungskabel verzichtet werden, es muss dazu aber auch keine Vielzahl an zweiten Anschlussboxen 10a, 10b mit Steckdosen in der Förderanlage 1 verbaut sein. Der Komfortgewinn für Wartungspersonal kann also mit geringem technischem Aufwand erzielt werden.

In einem weiteren Aspekt der Erfindung werden für den Wartungsfall benötigte elektrische Geräte (Reinigungsgeräte, Staubsauger, Kompressor, Bohrmaschine, Schleifmaschine und dergleichen) und/oder Ersatzteile in einem Ladehilfsmittel in einem automatisierte Lagerregal der Förderanlage 1 eingelagert und bei Bedarf mit Hilfe eines Regalbediengeräts und/oder mit Hilfe von Förderelementen der Förderanlage 1, insbesondere mit Hilfe eines Bereitstellförderers und/oder Hebers und/oder Paternosters und/oder mit Hilfe von Motorrollen 6a, an den Ort gefördert, an dem die Wartung stattfinden soll. Das Ladehilfsmittel kann insbesondere auch eine zweite Anschlussbox 10a, 10b mit einer Steckdose für die angesprochenen Geräte enthalten und natürlich auch ein nicht-motorisiertes Werkzeug (z.B. Schraubenschlüssel, Schraubendreher und dergleichen). Auf diese Weise kann sich Wartungspersonal an den Ort der Wartung begeben, ohne (schweres) Werkzeug schleppen zu müssen. In gleicher Weise können das Werkzeug und defekte Bauteile der Förderanlage 1 mit diesem (oder einem anderen) Ladehilfsmittel abtransportiert werden. Die Wartung der Förderanlage 1 kann daher wesentlich komfortabler und auch effizienter durchgeführt werden, als dies bis dato möglich war. Ein Lagerregal, ein Regalbediengerät, ein Bereitstellförderer, ein Heber und ein Paternoster sind an sich bekannt und daher an dieser Stelle nicht detailliert beschrieben und auch in den Figuren nicht dargestellt.

Das Ladehilfsmittel kann darüber hinaus farblich auffällig gestaltet sein oder zum Beispiel auch eine Signalleuchte (z.B. eine Rundumleuchte) aufweisen. Auf diese Weise kann Wartungspersonal an den Ort der Wartung geleitet werden. Aufwändige Wegbeschreibungen oder das Lesen komplizierter Pläne können daher entfallen.

Im Zusammenhang mit zweiten Anschlussboxen 10a, 10b, welche eine gefährliche Ausgangsspannung (insbesondere größer als 48 V) bereitstellen, kann es von Vorteil sein, wenn das erste/zweite Rahmenprofil 2 mit einem Schutzleiter verbunden ist, die zweite Anschlussbox 10a, 10b elektrisch mit dem ersten/zweiten Rahmenprofil 2 verbunden ist und die zweite Anschlussbox 10a, 10b ausgangsseitig einen Schutzleiteranschluss bereitstellt. Auf diese Weise können an der zweiten Anschlussbox 10a, 10b, welche zum Beispiel eine Steckdose für 110 VAC, 230 VAC und/oder 400 VAC oder einen Anschluss für eine solche bereitstellt, auch elektrische Geräte betrieben werden, die nicht schutzisoliert sind. Denkbar ist natürlich auch, dass zu diesem Zweck ein gesonderter Schutzleiter vorgesehen ist, welcher im Speziellen Teil des Energieversorgungsbusses 4 ist.

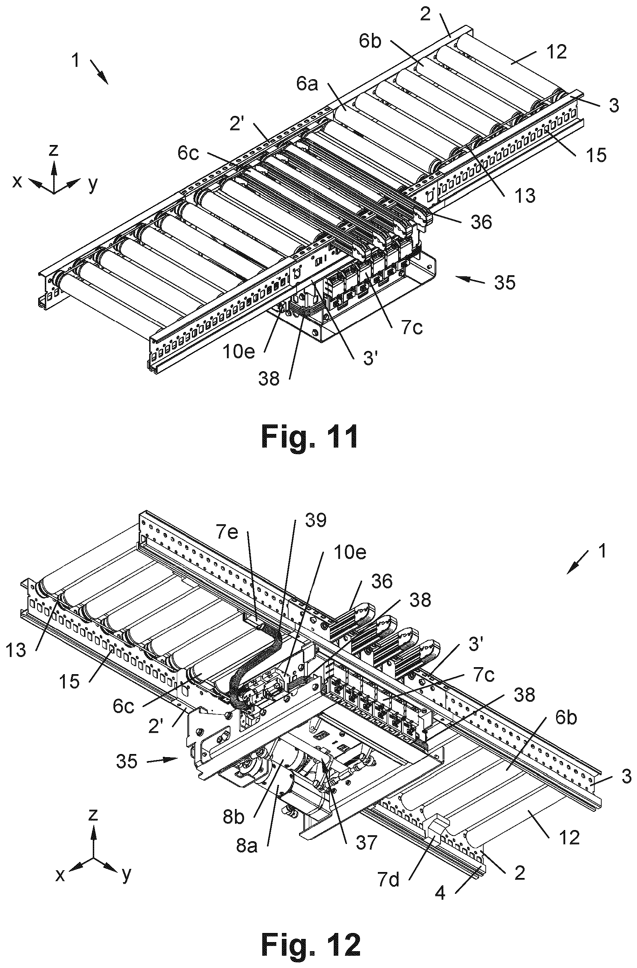

Die Figuren 11 und 12 zeigen schließlich einen weiteren Ausschnitt aus der beispielhaften Förderanlage 1. Konkret zeigt die Fig. 11 die Förderanlage 1 von schräg oben, die Fig. 12 von schräg unten. Die Förderanlage 1 weist ein in den Figuren 11 und 12 dargestelltes Transfermodul 35 auf, welches die Förderung von Stückgütern quer zur Förderrichtung y ermöglicht. Im dargestellten Beispiel erfolgt die Förderung in x-Richtung, denkbar wäre aber auch eine Förderung in schrägem Winkel quer zur Förderrichtung y. Das Transfermodul 35 weist zu diesem Zweck einige antreibbare Riemen 36 auf, welche jeweils zwischen zwei Motorrollen 6c angeordnet sind. Die Motorrollen 6c sind zwischen dem ersten Rahmenprofil 2' des Transfermoduls 35 und dem zweiten Rahmenprofil 3' des Transfermoduls 35 befestigt. Der erste Aktor 5 zum Antrieb der zumindest einen Motorrolle 6c (Förderelement) ist aus Gründen der besseren Übersicht nicht dargestellt. Die Riemen 36 können unter die durch die Motorrollen 6c gebildete Förderfläche abgesenkt oder darüber hinaus angehoben werden. Für die vertikale Verstellung in z-Richtung weist das Transfermodul 35 einen Hubmotor 8a auf, welcher ein Hubwerk 37 antreibt. Für den Antrieb der Riemen 36 weist das Transfermodul 35 einen Querfördermotor 8b auf. Die mechanische Funktion eines Transfermoduls 35 ist grundsätzlich bekannt und wird hier nicht im Detail, sondern nur kurz erläutert.

In der gezeigten Ausführung umfasst das Transfermodul 35 einen elektrischen Aktor 8a, welcher durch den Hubmotor gebildet ist, und einen elektrischen Aktor 8b, welcher durch den Querfördermotor gebildet ist. Der Aktor 8a dient dem Antrieb des Hubwerks 37, welches ein Funktionselement bildet. Der Aktor 8b dient dem Antrieb des Riemens 36 oder der Riemen 36, welcher ein Funktionselement bildet beziehungsweise welche Funktionselemente bilden.

Soll ein Stückgut quer zur Förderrichtung y bewegt werden, so werden die Riemen 36 mit dem Hubmotor 8a und dem Hubwerk 37 angehoben sowie mit dem Querfördermotor 8b in Bewegung versetzt. Soll ein Stückgut in Förderrichtung y bewegt werden, so werden die Riemen 36 mit dem Hubmotor 8a und dem Hubwerk 37 in die abgesenkte Stellung verstellt und die Motorrollen 6c eingeschaltet. Der Querfördermotor 8b kann in Folge ausgeschaltet werden, im Grunde kann er aber auch aktiviert bleiben, was insbesondere dann von Vorteil ist, wenn Bewegungen von Stückgütern in y-Richtung und x-Richtung in schneller Abfolge auszuführen sind. Dasselbe gilt für die Motorrollen 6c, die in angehobener Stellung des Hubwerks 37 ausgeschaltet werden oder aktiviert bleiben können.

In dem gezeigten Beispiel sind die Riemen 36 zwischen den Motorrollen 6c angeordnet. Dies ist zwar vorteilhaft, jedoch nicht zwingend. Das Transfermodul 35 könnte auch passiv angetriebene Rollen 12 oder freilaufenden Rollen 14 aufweisen. Zudem wird angemerkt, dass ein Transfermodul 35 nicht die genau dargestellte Zahl an Riemen 36 und Motorrollen 6c aufweisen muss, sondern diese auch vom konkret dargestellten Beispiel abweichen kann.

Der Hubmotor 8a und der Querfördermotor 8b werden über zumindest eine zweite Anschlussbox 10e mit elektrischer Energie versorgt, die Motorrollen 6c über die ersten Anschlussboxen 7c. Die ersten Anschlussboxen 7c und die zweiten Anschlussboxen 10e, die am Rahmen des Transfermoduls 35 im Bereich des zweiten Rahmenprofils 3' angeordnet sind, sind auf den Energieversorgungsbus 38 des Transfermoduls 35 aufgesteckt und solcherart elektrisch verbunden. Diese zweiten Anschlussboxen 10e sind mit Verbindungskabeln 39 mit weiteren ersten Anschlussboxen 7d, 7e verbunden, die zum Teil am ersten Rahmenprofil 2 und zum Teil am zweiten Rahmenprofil 3 angeordnet sind. Solcherart entsteht eine durchgehende Energieversorgung entlang der Förderanlage 1 über das Transfermodul 35 hinweg (Anmerkung: das rechte Verbindungskabel 39 ist in der Fig. 12 nicht sichtbar, in der Realität aber vorhanden).

Der Energieversorgungsbus 38 kann gleich ausgebildet sein wie der Energieversorgungsbus 4 oder unterschiedlich dazu. Grundsätzlich gilt das in den zuvor offenbarten Ausführungsbeispielen zum Energieversorgungsbus 4 Gesagte sinngemäß auch für den in den Figuren 11 und 12 dargestellten Energieversorgungsbus 38. Ebenso kann die elektrische Kontaktierung der ersten Anschlussboxen 10e mit dem Energieversorgungsbus 38 so erfolgen, wie dies für die Verbindung der ersten Anschlussbox 7, 7a, 7b und/oder zweiten Anschlussbox 10a..10d mit dem Energieversorgungsbus 4 in der weiter oben beschriebenen Weise in Zusammenhang mit den Kontakten 16, 18 erläutert ist. Ähnliches gilt auch für die in einer ersten Anschlussbox 7, 7a, 7b und/oder zweiten Anschlussbox 10a..10d verbauten Komponenten, wie zum Beispiel Steckdosen, Anschlussbuchsen 21a..21e, 26a, 26b, Spannungswandler 30 und dergleichen. Die betreffende technische Lehre ist natürlich ebenfalls uneingeschränkt auf die ersten Anschlussboxen 7c und/oder die zweiten Anschlussboxen 10e des Transfermoduls 35 anwendbar.

Die Motorrollen 6c sind in dem dargestellten Beispiel an die ersten Anschlussboxen 7c angeschlossen, der Hubmotor 8a und der Querfördermotor 8b an die zumindest eine zweite Anschlussbox 10e. Denkbar wäre natürlich auch, dass der Hubmotor 8a oder der Querfördermotor 8b an eine erste Anschlussbox 7c angeschlossen wird. Weiterhin wird angemerkt, dass der Hubmotor 8a und der Querfördermotor 8b an unterschiedliche zweite Anschlussboxen 10e angeschlossen sein können oder an eine einzige zweite Anschlussbox 10e. Auch kann eine zusätzliche zweite Anschlussbox 10e vorgesehen werden, an welche das Verbindungskabel 39 angeschlossen ist und die so ausgebildet ist, dass sie lediglich die elektrische Verbindung zwischen dem Verbindungskabel 39 und dem Energieversorgungsbus 38 des Transfermoduls 35 herstellt.

Denkbar ist weiterhin, dass eine Klappe beziehungsweise ein Abweiser 9, so wie er etwa in Fig. 1 dargestellt ist, im Bereich des Transfermoduls 35 angeordnet ist. Diese kann dazu eingesetzt werden, ein Stückgut, das in Querrichtung gefördert werden soll, anzuhalten, sodass es nicht unbeabsichtigt (beispielsweise aufgrund seiner Massenträgheit) den Bereich des Transfermoduls 35 verlassen kann. Die Klappe / der Abweiser 9 kann ebenfalls an eine zweite Anschlussbox 10e elektrisch angeschlossen sein.

Angemerkt wird, dass in den Figuren 11 und 12 die Anschlusskabel zwischen den Motorrollen 6c und den ersten Anschlussboxen 7c beziehungsweise die Anschlusskabel zwischen der zweiten Anschlussbox 10e und dem Hubmotor 8a / Querfördermotor 8b nicht dargestellt sind.

Angemerkt wird auch, dass das Transfermodul 35 in den Figuren 11 und 12 beziehungsweise in der obigen Beschreibung als Teil einer (größeren) Förderanlage 1 beschrieben ist. Denkbar ist aber auch, das Transfermodul 35 selbst als Förderanlage aufzufassen. Die in den Figuren 11 und 12 dargestellte Anordnung würde demnach drei aneinander gekoppelte beziehungsweise miteinander verbundene Förderanlagen aufweisen.

Durch die vorgeschlagenen Maßnahmen wird auch ein modulares System mehrerer elektrischer Anschlussboxen 7, 7a..7e, 10a..10e verwirklicht, das eine erste elektrische Anschlussbox 7, 7a..7e und eine zweite elektrische Anschlussbox 10a..10e aufweist.

Die Ausführungsbeispiele zeigen mögliche Ausführungsvarianten einer Förderanlage 1, 35 und einer zweiten Anschlussbox 10a..10e respektive eines modularen Systems von ersten Anschlussboxen 7, 7a..7e und zweiten Anschlussbox 10a..10e, wobei an dieser Stelle bemerkt sei, dass die Erfindung nicht auf die speziell dargestellten Ausführungsvarianten der offenbarten Vorrichtungen eingeschränkt ist.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

Die den eigenständigen erfinderischen Lösungen zugrundeliegende Aufgabe kann der Beschreibung entnommen werden.

### Bezugszeichenaufstellung

| | | | |
|---|---|---|---|
| 1 | Förderanlage | 32 | Klappensteuerung |
| 2, 2' | erstes Rahmenprofil | 33 | Antriebssteuerung |
| 3, 3' | zweites Rahmenprofil | 34 | Datenbus |
| 4 | Energieversorgungsbus | 35 | Transfermodul |
| 5 | erster Aktor (Außenläufermotor) | 36 | Riemen |
| | | 37 | Hubwerk |
| 6, 6a..6c | Motorrolle | 38 | Energieversorgungsbus |
| 7, 7a..7e | erste Anschlussbox | 39 | Verbindungskabel |
| 8, 8a, 8b | zweiter Aktor | | |
| 9 | Abweiser | a | Abstand erste Vorsprünge 23 |
| 10a..10e | zweite Anschlussbox | | |
| | | b | Breite Ausnehmung 15 |
| 11 | Anschlusskabel | c | Abstand Ausnehmungen 15 |
| 12 | passiv angetriebene Förderrolle | U1 | Eingangsspannung |
| | | U2 | Ausgangsspannung |
| 13 | Riemen | | |
| 14 | freilaufende Rolle | | |
| 15 | Ausnehmung in Rahmenprofil | | |
| 16 | Kontakte für ersten Spannungsbus | | |
| 17 | erster Spannungsbus | | |
| 18 | Kontakte für zweiten Spannungsbus | | |
| 19 | zweiter Spannungsbus | | |
| 20 | Kunststoffprofil | | |
| 21a..21e | Anschlussbuchse erste Anschlussbox | | |
| 22a, 22b | Rastnase | | |
| 23 | erster Vorsprung | | |
| 24 | zweiter Vorsprung | | |
| 25 | Halter | | |
| 26a, 26b | Anschlussbuche zweite Anschlussbox | | |
| 27 | Abstandshalter | | |
| 28 | Rollensteuerung | | |
| 29 | Antriebssteuerung | | |
| 30 | Spannungswandler | | |
| 31 | Steuerung für zweiten Aktor | | |

## Patentansprüche

1. Förderanlage (1, 35) zum Fördern von Stückgütern mit
einem ersten und einem zweiten Rahmenprofil (2, 3, 2', 3'),
einem elektrischen Energieversorgungsbus (4, 38), welcher entlang des ersten Rahmenprofils (2, 2') und/oder zweiten Rahmenprofils (3, 3') angeordnet ist und welcher einen ersten Spannungsbus (17) und einen davon getrennten zweiten Spannungsbus (19) aufweist,
einem als elektrischen Rotationsmotor ausgebildeten ersten Aktor (5) zum Antrieb zumindest eines Förderelementes (6a..6c), welches als motorisierte Förderrolle ausgebildet ist und am ersten Rahmenprofil (2, 2') und/oder zweiten Rahmenprofil (3, 3') gelagert ist,
einer ersten elektrischen Anschlussbox (7, 7a..7e), mittels welcher der erste Aktor (5) an den Energieversorgungsbus (4, 38) angeschlossen ist, welche mit einer ersten Steuerelektronik (29, 30) ausgestattet ist, welche an dem ersten/zweiten Rahmenprofil (2, 3, 2', 3') montiert ist, an dem auch der elektrische Energieversorgungsbus (4, 38) angeordnet ist, und welche erste Kontakte (16) umfasst, welche an den ersten Spannungsbus (17) angeschlossen sind, und
einer zweiten elektrischen Anschlussbox (10a..10e), welche im Bereich des ersten/zweiten Rahmenprofils (2, 3, 2', 3') montiert ist, an dem auch der elektrische Energieversorgungsbus (4, 38) angeordnet ist, und welche erste Kontakte (16) umfasst, welche an den ersten Spannungsbus (17) angeschlossen sind,
**dadurch gekennzeichnet, dass**
zusätzlich ein als Hubwerk, Sperrklappe, Anschlag oder Abweiser ausgebildetes Funktionselement (9, 36, 37) vorgesehen ist,
zusätzlich ein zweiter elektrischer Aktor (8, 8a, 8b) zum Antrieb des Funktionselementes (9, 36, 37) vorgesehen ist, welcher sich vom ersten elektrischen Aktor (5) unterscheidet und welcher mit Hilfe der zweiten elektrischen Anschlussbox (10a..10e) an den Energieversorgungsbus (4, 38) angeschlossen ist, und
sich die zweite Anschlussbox (10a..10e) von der ersten Anschlussbox (7, 7a..7e) baulich unterscheidet, wobei
a) die zweite Anschlussbox (10d) dazu ausgebildet ist, die Spannung des ersten Spannungsbusses (17) an den zweiten Aktor (8, 8a, 8b) weiterzuleiten, oder
b) der an die erste elektrische Anschlussbox (7, 7a..7e) angeschlossene erste Aktor (5) mit einer Spannung von 48 V und der an die zweite elektrische Anschlussbox (10a..10e) angeschlossene zweite Aktor (8, 8a, 8b) mit einer Spannung von 48 V versorgt wird.

2. Förderanlage (1, 35) nach Anspruch 1, **dadurch gekennzeichnet, dass** der erste Spannungsbus (17) eine Spannung von 48 V und der zweite Spannungsbus (19) eine Spannung von 24 V aufweist.

3. Förderanlage (1, 35) nach Anspruch 2, **dadurch gekennzeichnet, dass** an der ersten Anschlussbox (7, 7a..7e) ein Sensor mit einer Betriebsspannung von 24 V und an der zweiten Anschlussbox (10a..10e) ein weiterer zweiter Aktor (8, 8a, 8b) mit einer Betriebsspannung von 24 V angeschlossen ist.

4. Förderanlage (1, 35) nach einem der Ansprüche 1 bis 3, **dadurch gekennzeichnet, dass** die zweite elektrische Anschlussbox (10a..10e) in derselben Weise wie die erste Anschlussbox (7, 7a..7e) am ersten/zweiten Rahmenprofil (2, 3, 2', 3') montiert und mit dem elektrischen Energieversorgungsbus (4, 38) verbunden ist.

5. Förderanlage (1, 35) nach einem der Ansprüche 1 bis 4, **dadurch gekennzeichnet, dass** die erste Anschlussbox (7, 7a..7e) und die zweite Anschlussbox (10a..10e) hinsichtlich ihrer Anordnung von Kontakten (16, 18) zur Kontaktierung mit dem elektrischen Energieversorgungsbus (4. 38) identisch sind.

6. Förderanlage (1, 35) nach einem der Ansprüche 1 bis 5, **dadurch gekennzeichnet, dass** die zweite elektrische Anschlussbox (10a..10e) auch mechanisch mit dem elektrischen Energieversorgungsbus (4, 38) verbunden ist.

7. Förderanlage (1, 35) nach einem der Ansprüche 1 bis 6, **dadurch gekennzeichnet, dass** das erste/zweite Rahmenprofil (2, 3, 2', 3') mehrere in Längsrichtung des ersten/zweiten Rahmenprofils (2, 3, 2', 3') voneinander beabstandete Ausnehmungen (15) aufweist und die zweite Anschlussbox (10a..10e) zwei in Längsrichtung des ersten/zweiten Rahmenprofils (2, 3, 2', 3') voneinander beabstandete, erste Vorsprünge (23) aufweist, wobei der Abstand (a) zwischen den ersten Vorsprüngen (23) kleiner ist als die in Längsrichtung des ersten/zweiten Rahmenprofils (2, 3, 2', 3') gemessene Breite (b) einer Ausnehmung (15), jedoch größer als der Abstand (c) zwischen zwei Ausnehmungen (15).

8. Förderanlage (1, 35) nach Anspruch 7, **dadurch gekennzeichnet, dass** die zweite elektrische Anschlussbox (10a..10e) zweite Vorsprünge (24) aufweist, welche zwischen elektrischen Leitern (17, 19) des Energieversorgungsbusses (4, 38) liegen.

9. Förderanlage (1, 35) nach einem der Ansprüche 1 bis 8, **dadurch gekennzeichnet, dass** die Nennspannung des ersten Spannungsbusses (17) von der Nennspannung des zweiten Spannungsbusses (19) unterschiedlich ist und diese insbesondere um mindestens das Zweifache übersteigt.

10. Förderanlage (1, 35) nach einem der Ansprüche 1 bis 9, **dadurch gekennzeichnet, dass** die erste elektrische Anschlussbox (7, 7a..7e) und die zweite elektrische Anschlussbox (10a..10e) zweite Kontakte (18) umfasst, welche an den zweiten Spannungsbus (19) angeschlossen sind.

11. Förderanlage (1, 35) nach einem der Ansprüche 1 bis 10, **dadurch gekennzeichnet, dass** das erste/zweite Rahmenprofil (2, 3, 2', 3') mit einem Schutzleiter verbunden ist, die zweite Anschlussbox (10a..10e) elektrisch mit dem ersten/zweiten Rahmenprofil (2, 3, 2', 3') verbunden ist und die zweite Anschlussbox (10a..10e) ausgangsseitig einen Schutzleiteranschluss bereitstellt.

12. Förderanlage (1, 35) nach Anspruch 10 oder 11, **dadurch gekennzeichnet, dass** die von der zweiten Anschlussbox (10a..10e) an den zweiten Aktor (8, 8a, 8b) weitergeleitete Versorgungsspannung (U2) im Fall a) der Spannung am zweiten Spannungsbus (19) entspricht.

13. Förderanlage (1, 35) nach einem der Ansprüche 1 bis 12, **dadurch gekennzeichnet, dass** die erste Anschlussbox (7, 7a..7e) für den Anschluss des ersten Aktors (5) eine Buchse / einen Stecker aufweist und die zweite Anschlussbox (10a..10e) für den Anschluss des zweiten Aktors (8, 8a, 8b) Klemmen aufweist.

## Claims

1. A conveyor system (1, 35) for conveying piece goods, having
a first and a second frame profile (2, 3, 2', 3'),
an electrical energy supply bus (4, 38), which is disposed along the first frame profile (2, 2') and/or second frame profile (3, 3') and which has a first voltage bus (17) and a second voltage bus (19) separate from the former,
a first actuator (5), configured as an electrical rotary motor, for drive of at least one conveying element (6a...6c), which is mounted on the first frame profile (2, 2') and/or second frame profile (3, 3'),
a first electrical connection box (7, 7a...7e), by means of which box the first actuator (5) is connected to the energy supply bus (4, 38), which box is equipped with first control electronics (29, 30), and which box is mounted on the first/second frame profile (2, 3, 2', 3'), on which the electrical energy supply bus (4, 38) is also disposed, and which box comprises first contacts (16), which are connected to the first voltage bus (17), and
a second electrical connection box (10a...10e), which box is mounted in the region of the first/second frame profile (2, 3, 2', 3'), on which the electrical energy supply bus (4, 38) is also disposed, and which box comprises first contacts (16), which are connected to the first voltage bus (17),
**characterized in that**
a functional element (9, 36, 37) configured as a lifting mechanism, locking flap, stop or deflector is additionally provided,
a second electrical actuator (8, 8a, 8b) for drive of the functional element (9, 36, 37) is additionally provided, which second electrical actuator (8, 8a, 8b) differs from the first electrical actuator (5) and is connected to the energy supply bus (4, 38) by means of the second electrical connection box (10a..10e), and
the second connection box (10a..10e) is structurally different from the first connection box (7, 7a..7e), wherein
a) the second connection box (10d) is configured for passing the voltage of the first voltage bus (17) on to the second actuator (8, 8a, 8b), or
b) the first actuator (5), which is connected to the first electrical connection box (7, 7a..7e), is supplied with a voltage of 48 V, and the second actuator (8, 8a, 8b), which is connected to the second electrical connection box (10a..10e), is supplied with a voltage of 48 V.

2. The conveyor system (1, 35) according to claim 1, **characterized in that** the first voltage bus (17) has a voltage of 48 V and the second voltage bus (19) has a voltage of 24 V.

3. The conveyor system (1, 35) according to claim 2, **characterized in that** a sensor having an operating voltage of 24 V is connected to the first connection box (7, 7a..7e), and a further second actuator (8, 8a, 8b) with an operating voltage of 24 V is connected to the second connection box (10a..10e).

4. The conveyor system (1, 35) according to one of claims 1 to 3, **characterized in that** the second electrical connection box (10a..10e), in the same way as the first connection box (7, 7a..7e), is mounted on the first/second frame profile (2, 3, 2', 3') and connected to the electrical energy supply bus (4, 38).

5. The conveyor system (1, 35) according to one of claims 1 to 4, **characterized in that** the first connection box (7, 7a..7e) and the second connection box (10a..10e) are identical with regard to their arrangement of contacts (16, 18) for contacting with the electrical energy supply bus (4, 38).

6. The conveyor system (1, 35) according to one of claims 1 to 5, **characterized in that** the second electrical connection box (10a..10e) is also mechanically connected to the electrical energy supply bus (4, 38).

7. The conveyor system (1, 35) according to one of claims 1 to 6, **characterized in that** the first/second frame profile (2, 3, 2', 3') has multiple recesses (15) spaced apart from one another in the longitudinal direction of the first/second frame profile (2, 3, 2', 3'), and the second connection box (10a...10e) has two first projections (23) spaced apart from one another in the longitudinal direction of the first/second frame profile (2, 3, 2', 3'), wherein the distance (a) between the first projections (23) is smaller than the width (b) of a recess (15), measured in the longitudinal direction of the first/second frame profile (2, 3, 2', 3'), but greater than the distance (c) between two recesses (15).

8. The conveyor system (1, 35) according to claim 7, **characterized in that** the second electrical connection box (10a...10e) has second projections (24), which lie between electrical conductors (17, 19) of the energy supply bus (4, 38).

9. The conveyor system (1, 35) according to one of claims 1 to 8, **characterized in that** the nominal voltage of the first voltage bus (17) is different from the nominal voltage of the second voltage bus (19) and, in particular, exceeds it by at least two times.

10. The conveyor system (1, 35) according to one of claims 1 to 9, **characterized in that** the first electrical connection box (7, 7a...7e) and the second electrical connection box (10a...10e) comprise second contacts (18), which are connected to the second voltage bus (19).

11. The conveyor system (1, 35) according to one of claims 1 to 10, **characterized in that** the first/second frame profile (2, 3, 2', 3') is connected to a protective ground wire, the second connection box (10a...10e) is electrically connected to the first/second frame profile (2, 3, 2', 3'), and the second connection box (10a...10e) makes a protective conductor connection available on the output side.

12. The conveyor system (1, 35) according to claim 10 or 11, **characterized in that** the supply voltage (U2) passed on to the second actuator (8, 8a, 8b) by the second connection box (10a...10e) corresponds to the voltage at the second voltage bus (19) in case a).

13. The conveyor system (1, 35) according to one of claims 1 to 12, **characterized in that** the first connection box (7, 7a..7e) has a jack / a plug for connection of the first actuator (5), and the second connection box (10a...10e) has terminals for connection of the second actuator (8, 8a, 8b).

## Revendications

1. Convoyeur (1, 35) pour convoyer des marchandises en vrac, comprenant
un premier et un deuxième profilés de châssis (2, 3, 2', 3'),
un bus d'alimentation électrique (4, 38) qui est agencé le long du premier profilé de châssis (2, 2') et/ou du deuxième profilé de châssis (3, 3') et qui présente un premier bus de tension (17) et un deuxième bus de tension (19) séparé de celui-ci,
un premier actionneur (5) conçu comme un moteur électrique rotatif pour l'entraînement d'au moins un élément de convoyage (6a.. 6c) conçu comme un rouleau de convoyage motorisé et monté sur le premier profilé de châssis (2, 2') et/ou le deuxième profilé de châssis (3, 3'),
un premier boîtier de raccordement électrique (7, 7a.. 7e) au moyen duquel le premier actionneur (5) est raccordé au bus d'alimentation électrique (4, 38), qui est équipé d'un premier système électronique de commande (29, 30) qui est monté sur le premier/deuxième profilé de châssis (2, 3, 2', 3') sur lequel est également agencé le bus d'alimentation électrique (4, 38), et qui comprend des premiers contacts (16) raccordés au premier bus de tension (17), et
un deuxième boîtier de raccordement électrique (10a..10e) qui est monté dans la zone du premier/deuxième profilé de châssis (2, 3, 2', 3') sur lequel est également agencé le bus d'alimentation électrique (4, 38), et qui comprend des premiers contacts (16) raccordés au premier bus de tension (17),
**caractérisé en ce**
**qu'**un élément fonctionnel est en outre prévu sous forme de mécanisme de levage, de clapet d'arrêt, de butée ou de déflecteur (9, 36, 37),
**qu'**un deuxième actionneur électrique supplémentaire (8, 8a, 8b) est prévu pour entraîner l'élément fonctionnel (9, 36, 37), lequel se distingue du premier actionneur électrique (5) et lequel est raccordé au bus d'alimentation électrique (4, 38) à l'aide du deuxième boîtier de raccordement électrique (10a.. 10e), et
**que** le deuxième boîtier de raccordement (10a..10e) se distingue du premier boîtier de raccordement (7, 7a..7e) sur le plan constructif,
a) le deuxième boîtier de raccordement (10d) étant conçu pour transmettre la tension du premier bus de tension (17) au deuxième actionneur (8, 8a, 8b), ou
b) le premier actionneur (5) raccordé au premier boîtier de raccordement électrique (7, 7a..7e) étant alimenté par une tension de 48 V et le deuxième actionneur (8, 8a, 8b) raccordé au deuxième boîtier de raccordement électrique (10a..10e) étant alimenté par une tension de 48 V.

2. Convoyeur (1, 35) selon la revendication 1, **caractérisé en ce que** le premier bus de tension (17) présente une tension de 48 V et le deuxième bus de tension (19) une tension de 24 V.

3. Convoyeur (1, 35) selon la revendication 2, **caractérisé en ce qu'**un capteur avec une tension de service de 24 V est raccordé au premier boîtier de raccordement (7, 7a..7e) et un deuxième actionneur supplémentaire (8, 8a, 8b) avec une tension de service de 24 V est raccordé au deuxième boîtier de raccordement (10a..10e).

4. Convoyeur (1, 35) selon l'une des revendications 1 à 3, **caractérisé en ce que** le deuxième boîtier de raccordement électrique (10a.. 10e) est monté de la même manière que le premier boîtier de raccordement (7, 7a..7e) sur le premier/deuxième profilé de châssis (2, 3, 2', 3') et est relié au bus d'alimentation électrique (4, 38).

5. Convoyeur (1, 35) selon l'une des revendications 1 à 4, **caractérisé en ce que** le premier boîtier de raccordement (7, 7a..7e) et le deuxième boîtier de raccordement (10a.. 10e) sont identiques en ce qui concerne leur agencement des contacts (16, 18) pour la connexion au bus d'alimentation électrique (4, 38).

6. Convoyeur (1, 35) selon l'une des revendications 1 à 5, **caractérisé en ce que** le deuxième boîtier de raccordement électrique (10a.. 10e) est également relié mécaniquement au bus d'alimentation électrique (4, 38).

7. Convoyeur (1, 35) selon l'une des revendications 1 à 6, **caractérisé en ce que** le premier/deuxième profilé de châssis (2, 3, 2', 3') présente plusieurs évidements (15) espacés les uns des autres dans la direction longitudinale du premier/deuxième profilé de châssis (2, 3, 2', 3') et **en ce que** le deuxième boîtier de raccordement (10a.. 10e) présente deux premières saillies (23) espacées l'une de l'autre dans la direction longitudinale du premier/deuxième profilé de châssis (2, 3, 2', 3'), la distance (a) entre les premières saillies (23) étant inférieure à la largeur (b) d'un évidement (15) mesurée dans la direction longitudinale du premier/deuxième profilé de châssis (2, 3, 2', 3'), mais supérieure à la distance (c) entre deux évidements (15).

8. Convoyeur (1, 35) selon la revendication 7, **caractérisée en ce que** le deuxième boîtier de raccordement électrique (10a..10e) présente des deuxièmes saillies (24) qui sont situées entre les conducteurs électriques (17, 19) du bus d'alimentation électrique (4, 38).

9. Convoyeur (1, 35) selon l'une des revendications 1 à 8, **caractérisé en ce que** la tension nominale du premier bus de tension (17) est différente de la tension nominale du deuxième bus de tension (19) et la dépasse en particulier d'au moins deux fois.

10. Convoyeur (1, 35) selon l'une des revendications 1 à 9, **caractérisé en ce que** le premier boîtier de raccordement électrique (7, 7a..7e) et le deuxième boîtier de raccordement électrique (10a..10e) comprennent des deuxièmes contacts (18) qui sont raccordés au deuxième bus de tension (19).

11. Convoyeur (1, 35) selon l'une des revendications 1 à 10, **caractérisé en ce que** le premier/deuxième profilé de châssis (2, 3, 2', 3') est relié à un conducteur de protection, le deuxième boîtier de raccordement (10a.. 10e) est relié électriquement au premier/deuxième profilé de châssis (2, 3, 2', 3') et le deuxième boîtier de raccordement (10a.. 10e) fournit un raccordement de conducteur de protection côté sortie.

12. Convoyeur (1, 35) selon la revendication 10 ou 11, **caractérisé en ce que** la tension d'alimentation (U2) transmise par le deuxième boîtier de raccordement (10a.. 10e) au deuxième actionneur (8, 8a, 8b) correspond, dans le cas a), à la tension au niveau du deuxième bus de tension (19).

13. Convoyeur (1, 35) selon l'une des revendications 1 à 12, **caractérisé en ce que** le premier boîtier de raccordement (7, 7a..7e) pour le raccordement du premier actionneur (5) présente une douille / une fiche et **en ce que** le deuxième boîtier de raccordement (10a..10e) destiné au raccordement du deuxième actionneur (8, 8a, 8b) présente des bornes.
